(19) Europäisches Patentamt
European Patent Office
Office européen des brevets

(11) **EP 2 389 610 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(21) Anmeldenummer: **09801668.6**

(22) Anmeldetag: **21.12.2009**

(51) Int Cl.:
*G02C 7/02* *(2006.01)*     *G02C 7/06* *(2006.01)*

(86) Internationale Anmeldenummer:
**PCT/EP2009/009194**

(87) Internationale Veröffentlichungsnummer:
**WO 2010/083868 (29.07.2010 Gazette 2010/30)**

(54) **VARIABLES GLEITSICHTGLASDESIGN**

VARIABLE PROGRESSIVE LENS DESIGN

DESIGN VARIABLE DE VERRE OPHTALMIQUE PROGRESSIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.01.2009 DE 102009005206**

(43) Veröffentlichungstag der Anmeldung:
**30.11.2011 Patentblatt 2011/48**

(73) Patentinhaber: **Rodenstock GmbH**
**80687 München (DE)**

(72) Erfinder:
• **ALTHEIMER, Helmut**
**87650 Baisweil-Lauchdorf (DE)**
• **BECKEN, Wolfgang**
**81541 München (DE)**
• **ESSER, Gregor**
**81735 München (DE)**
• **UTTENWEILER, Dietmar**
**82057 Icking (DE)**

(74) Vertreter: **Müller-Boré & Partner Patentanwälte PartG mbB**
**Friedenheimer Brücke 21**
**80639 München (DE)**

(56) Entgegenhaltungen:
**EP-A1- 0 880 046      WO-A1-2004/086125
WO-A1-2007/004070      WO-A1-2008/089995
WO-A1-2008/089996      US-A1- 2006 050 236**

**Beschreibung**

Die Erfindung betrifft ein Verfahren zum Berechnen eines individuellen Brillenglasdesigns, ein Verfahren zum Herstellen eines individuellen progressiven Brillenglases, entsprechende Vorrichtungen zum Berechnen eines individuellen Brillenglasdesigns und zum Herstellen eines individuellen Brillenglases, entsprechende Computerprogrammerzeugnisse und Speichermedien sowie eine Verwendung eines Brillenglases.

Die Berechnung und Optimierung von Gleitsichtbrillengläsern in der jeweiligen Gebrauchsstellung bzw. Gebrauchssituation hat mittlerweile einen hohen technischen und optischen Standard erreicht. So können nach dem Stand der Technik Gleitsichtbrillengläser unter Berücksichtigung der individuellen Verordnung (sph, Zyl, Achse, Add, Prisma, Basis) und der individuellen Lage bzw. Anordnung der Gläser vor dem Auge des Brillenträgers (z.B. Hornhautscheitelabstand (HSA), Fassungsscheibenwinkel (FSW), Vorneigung bzw. pantoskopischer Winkel) und Berücksichtigung von physiologischen Parametern (z.B. Pupillendistanz) online nach Bestelleingang als Unikat optimiert und berechnet werden. Der Kunde kann jedoch in der Regel nur aus wenigen (meistens 2) Brillenglasdesigns, welche sich insbesondere lediglich durch die Progressionslänge unterscheiden, auswählen.

Nach dem Stand der Technik werden ferner für jedes neu zu entwickelnde Design und speziell auch für jede Progressionszonenlänge eigene Sollvorgaben (Designs) erarbeitet und hinterlegt. So werden neben den Universalgleitsichtgläsern auch für diverse Spezialgleitsichtgläser Designs entwickelt, die sich häufig im Wesentlichen nur bezüglich der Hauptssehaufgaben und damit bezüglich der Hauptblickrichtungen im Fern- und im Nahbereich unterscheiden. In der PCT/DE01/00188 wird deswegen vorgeschlagen, das Design für unterschiedliche Anwendungen (Autofahrer, Pilot, Uhrmacher, etc.) direkt vorzugeben. Doch auch mit diesem sehr aufwendigen Vorgehen bezüglich Designerarbeitung, bezüglich der Logistik der vielen unterschiedlichen Designs beim Hersteller und auch bezüglich der notwendigen Produktschulungen beim Augenoptiker kann vielfach auf die individuellen Benutzersituationen mit diesen Standarddesigns nicht zufriedenstellend reagiert werden.

Eine Aufgabe der Erfindung ist es, ein schnelles, effizientes und flexibles Verfahren zum Berechnen eines Brillenglasdesigns, insbesondere eines individuellen Brillenglasdesigns, sowie ein Verfahren zur Herstellung eines Brillenglases nach dem so berechneten Brillenglasdesign bereitzustellen. Es ist femer eine Aufgabe der Erfindung, eine entsprechende Vorrichtung zum Herstellen eines Brillenglases, insbesondere eines individuellen Brillenglases, sowie entsprechende Computerprogrammerzeugnis und Speichermedium bereitzustellen. Ferner ist es Aufgabe der Erfindung, ein Verfahren zum Berechnen eines Brillenglasdesigns vorzuschlagen, wobei das Brillenglasdesign besser an die individuellen Präferenzen, Anwendungsschwerpunkte, Fassungsdaten sowie andere individuellen Daten des Brillenträgers angepaßt wird.

Diese Aufgaben werden durch ein Verfahren zum Erzeugen bzw. Berechnen eines Brillenglasdesigns mit den Merkmalen gemäß Anspruch 1, eine Vorrichtung zum Erzeugen bzw. Berechnen eines Brillenglasdesigns mit den Merkmalen gemäß Anspruch 15, ein Computerprogrammerzeugnis mit den Merkmalen gemäß Anspruch 16, ein Verfahren zum Herstellen eines progressiven Brillenglases mit den Merkmalen gemäß Anspruch 17, eine Vorrichtung zum Herstellen eines Brillenglases mit den Merkmalen gemäß Anspruch 19 sowie ein Computerprogrammerzeugnis mit den Merkmalen gemäß Anspruch 20. Bevorzugte Ausführungsformen sind Gegenstand der Unteransprüche.

Gemäß einem Aspekt der Erfindung wird ein computerimplementiertes Verfahren zum Erzeugen bzw. Berechnen eines Designs für ein progressives Brillenglas vorgeschlagen, umfassend die Schritte

- Vorgabe einer Hauptlinie;
- Vorgaben für Sollastigmatismuswerte $A(u = 0, y)$ entlang der Hauptlinie; und
- Vorgaben für den Verlauf zumindest einer Basis-Sollisoastigmatismuslinie, wobei der Verlauf der Basis-Sollisoastigmatismuslinie durch eine eindimensionale Funktion der Form $u_G(y) = f(y)$ beschrieben wird;
- Berechnen einer räumlichen Verteilung der Sollastigmatismuswerte $A(u,y)$ des zu berechnenden Designs mittels einer Interpolation zwischen den Sollastigmatismuswerten $A(u = 0, y)$ auf der Hauptlinie und den Sollastigmatismuswerten $A(u_G(y), y)$ auf der Basis-Sollisoastigmatismuslinie, wobei

$u$          den horizontalen. Abstand von der Hauptlinie eines Punktes $(u, y)$ des Brillenglasdesigns;

$y$          die vertikale Koordinate des Punktes $(u, y)$ des Brillenglasdesigns;

$u_G(y)$      den horizontalen Abstand von der Hauptlinie eines Punktes $(u_G(y), y)$ auf der Basis-Sollisoastigmatismuslinie;

bezeichnen.

Gemäß einem weiteren Aspekt der Erfindung wird ein computerimplementiertes Verfahren zum Erzeugen bzw. Berechnen eines Designs für ein progressives Brillenglas vorgeschlagen, umfassend die Schritte

- Festlegen eines Startdesigns umfassend:

- Vorgabe einer Hauptlinie;
- Vorgaben für Sollastigmatismuswerte $A(u = 0, y)$ entlang der Hauptlinie; und
- Vorgaben für den Verlauf zumindest einer Basis-Sollisoastigmatismuslinie $u_G (y) = f(y)$;

- Transformieren des Startdesigns, wobei das Transformieren des Startdesigns

  - ein Abändern des Verlaufs der Basis-Sollisoastigmatismuslinie $u_G(Y) \rightarrow u'_G (y)$; und
  - ein Berechnen der Sollastigmatismuswerte $A(u, y)$ des zu berechnenden Designs mittels einer Interpolation zwischen den Sollastigmatismuswerten $A(u = 0, y)$ auf der Hauptlinie und den Sollastigmatismuswerten $A(u'_G(y), y)$ auf der abgeänderten Basis-Sollisoastigmatismuslinie

umfaßt, wobei

| | |
|---|---|
| $u$ | den horizontalen Abstand von der Hauptlinie eines Punktes $(u, y)$ des Brillenglasdesigns; |
| $y$ | die vertikale Koordinate des Punktes $(u, y)$ des Brillenglasdesigns; |
| $u_G(y)$ | den horizontalen Abstand von der Hauptlinie eines Punktes $(u_G(y), y)$ auf der Basis-Sollisoastigmatismuslinie; |
| $u'_G(y)$ | den horizontalen Abstand von der Hauptlinie eines Punktes $(u_G(y), y)$ auf der abgeänderten Basis-Sollisoastigmatismuslinie |

bezeichnen.

Die Basis-Sollisoastigmatismuslinie verläuft durch einen ersten vorgegebenen oder vorgebbaren Steuerpunkt $\overline{r}_1 = (u_1, y_1)$. Das Abändern des Verlaufs der Basis-Sollisoastigmatismuslinie umfaßt die Schritte:

- Verschieben des ersten Steuerpunkts $\overline{r}_1 \rightarrow \overline{r'}_1 (u'_1, y'_1)$ entlang einer vorgegebenen bzw. vorgebbaren Kurve; und
- Berechnung der abgeänderten Basis-Sollisoastigmatismuslinie derart, daß diese durch den verschobenen ersten Steuerpunkt $\overline{r'}_1 (u'_1, y'_1)$ verläuft.

Die Optimierung von progressiven Brillengläsern erfolgt in der Regel durch Minimierung einer Zielfunktion, in welcher Ziel- bzw. Sollwerte für zumindest einen Abbildungsfehler (insbesondere Zielwerte für die astigmatische Abweichung) des progressiven Brillenglases eingehen. Die in die Zielfunktion eingehenden Ziel- bzw. Sollwerte des zumindest einen Abbildungsfehlers und insbesondere der astigmatischen Abweichung charakterisieren das Design eines Brillenglases.

Eine designbasierte Optimierung eines progressiven Brillenglases kann zum Beispiel durch Minimierung einer Zielfunktion der Form:

$$F(\bar{x}) = \sum_{i=1}^{m} \left[ g_{i,\Delta R} (\Delta R_i - \Delta R_{i,Soll})^2 + g_{i,Ast} (Ast_i - Ast_{i,Soll})^2 + \dots \right]$$

erfolgen.

In der obigen Formel bezeichnen:

| | |
|---|---|
| $\Delta R_{i,Soll}$ | den Sollwert des lokalen Refraktionsfehlers an der $i$-ten Bewertungsstelle; |
| $\Delta R_i$ | den tatsächlichen lokalen Refraktionsfehler an der $i$-ten Bewertungsstelle; |
| $Ast_{i,Soll}$ | den Sollwert der lokalen astigmatischen Abweichung bzw. des lokalen astigmatischen Fehlers an der $i$-ten Bewertungsstelle; |
| $Ast_i$ | die tatsächliche lokale astigmatische Abweichung bzw. der tatsächliche lokale astigmatische Fehler an der $i$-ten Bewertungsstelle; |
| $g_{i,\Delta R}$ | die lokale Gewichtung des Refraktionsfehlers an der $i$-ten Bewertungsstelle; |
| $g_{i,Ast}$ | die lokale Gewichtung der astigmatischen Abweichung bzw. des astigmatischen Fehlers an der $i$-ten Bewertungsstelle. |

Der Refraktionsfehler stellt die Differenz des Brechwerts des Brillenglases von dem Brechwert, welcher mittels Refraktionsbestimmung ermittelt wird, dar. Die astigmatische Abweichung bzw. der astigmatische Fehler stellt die Differenz des Astigmatismus des Brillenglases von dem Astigmatismus, weicher mittels Refraktionsbestimmung ermittelt wird, dar. Vorzugsweise handelt es sich dabei um Werte in Gebrauchsstellung des Brillenglases, d.h. unter Berücksichtigung des Systems Brillenglas-Auge.

Die räumliche Verteilung der Abbildungsfehler $\Delta R_i$ und $\Delta R_{i,soll}$ bzw. $Ast_i$ und $Ast_{i,soll}$ können in der Form $\Delta R(x,y)$, $\Delta R_{soll}(x, y)$ bzw. $Ast(x, y)$ und $Ast_{soll}(x, y)$ angegeben werden.

Hierbei bezieht sich das Koordinatensystem beispielsweise auf ein Koordinatensystem in der zu optimierenden (objektseitigen oder augenseitigen) Fläche des Brillenglases, wobei der Ursprung des Koordinatensystems beispielsweise mit dem geometrischen Mittelpunkt des (rohrunden) Brillenglases oder mit dem Zentrier- oder Anpaßpunkt des Brillenglases zusammenfällt. Die vertikale (" $y$ ") und horizontale (" $x$ ") Achse liegen in der tangentialen Ebene zu der jeweiligen (augenseitigen oder objektseitigen) Fläche des Brillenglases in dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. Es ist selbstverständlich möglich, die räumliche Verteilung der Abbildungsfehler in anderen geeigneten Koordinatensystemen anzugeben. Insbesondere ist es bevorzugt, die Optimierungswerte im Koordinatensystem der zu optimierenden Fläche bezüglich der Hauptlinie (wobei auf der Hauptlinie $u = 0$ gilt) und nicht bezüglich der $y$ - Achse ( $x = 0$ ) anzugeben, d.h. in der Form $\Delta R(u, y)$, $\Delta R_{soll}(u,y)$, $Ast(u, y)$ und $Ast_{soll}(u, y)$. Werden die Sollwerte bzw. die Optimierungssollwerte in Bezug auf die Hauptlinie vorgegeben, ist es bei einer Änderung der zu berücksichtigenden Gebrauchsstellung des Brillenglases, und insbesondere bei einer Änderung der Pupillendistanz, des Hornhautscheitelabstands, der Vorneigung, des Objektabstandsmodells, etc. ausreichend, lediglich einen Abgleich der Hauptlinie an die veränderte Hauptblicklinie durchzuführen. Die Sollwerte bzw. die Optimierungssollwerte werden dann automatisch angepaßt.

Die räumliche Verteilung der Sollwerte der Abbildungsfehler (insbesondere der astigmatischen Abweichung $Ast_{i,Soll}$ bzw. $Ast_{soll}(x, y)$ bzw. $Ast_{soll}(u, y)$) über das Brillenglas, welche in die Optimierung des Brillenglases als Zielwerte eingehen, und gegebenenfalls deren lokale Gewichtungen ($g_{i,A}$, $g_i$,$\Delta R$) charakterisieren das Design eines progressiven Brillenglases. Anders ausgedrückt umfaßt das Design eines Brillenglases in der Regel die Verteilung der Sollwerte für eine oder mehrere Abbildungsfehler (insbesondere der astigmatischen Abweichung $Ast_{i,soll}$ bzw. $Ast_{soll}(x, y)$ bzw. $Ast_{soll}(u, y)$), welche in die Optimierung des Brillenglases als Zielwerte eingehen.

Dabei spielt insbesondere die Hauptlinie sowie die räumliche Verteilung der Sollwerte $Ast_{i,soll}$ bzw. $Ast_{soll}(x,y)$ bzw. $Ast_{soll}(u,y)$ der astigmatischen Abweichung über das Brillenglas eine zentrale Rolle bei der Designfestlegung und Optimierung von progressiven Brillengläsern. So erfolgt die Einteilung der Gleitsichtglasdesigns und die Beurteilung der Sehfeldgrößen zweckmäßigerweise anhand der Astigmatismusverteilung. Ferner kann ein Brillenglasdesign ebenfalls die Verteilung der Sollwerte für Refraktionsfehler, Vergrößerungs-, Verzerrungsoder anderer Abbildungsfehler umfassen. Dabei kann es sich um Flächenwerte oder vorzugsweise um Gebrauchswerte, d.h. Werte in Gebrauchsstellung des Brillenglases, handeln.

Darüber hinaus kann das Brillenglasdesign ein geeignetes Objektabstandsmodell umfassen. Das Objektabstandsmodell kann beispielsweise eine Objektabstandsfunktion, welche als die reziproke Objektentfernung entlang der Hauptlinie definiert ist, umfassen. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Unter einer Hauptlinie wird eine im wesentlichen gerade oder gewunden verlaufende Linie verstanden, entlang welcher die gewünschte Zunahme des Brechwerts des Brillenglases vom Fern- zum Nahteil erreicht wird. Die Hauptlinie verläuft im wesentlichen mittig zu dem Brillenglas von oben nach unten, d.h. entlang einer im wesentlichen vertikalen Richtung. Die Hauptlinie stellt somit eine Konstruktionslinie im Koordinatensystem der zu optimierenden (objektseitigen oder augenseitigen) Fläche zur Beschreibung der Sollwerte dar. Der Verlauf der Hauptlinie des Brillenglases wird so gewählt, daß sie zumindest in etwa der Hauptblicklinie folgt. Ein Verfahren zum Anpassen der Hauptlinie an die Hauptblicklinie wird z.B. in EP 1 277 079 beschrieben.

Unter einer Hauptblicklinie wird die Folge der Durchstoßpunkte der Hauptstrahlen durch die jeweilige Brillenglasfläche beim Blick auf eine Linie verstanden, welche in der senkrechten Ebene liegt, die den Abstand der beiden Augendrehpunkte halbiert (s.g. Zyklopenaugenebene). Bei der Brillenglasfläche kann es sich um die objekt- oder die augenseitige Fläche handeln. Die Lage der Linie in der Zyklopenaugenebene wird durch das gewählte Objektabstandmodell bestimmt. Ein progressives Brillenglasdesign umfaßt in der Regel einen Fern-, einen Nah- und einen Zwischen- bzw. Progressionsbereich. Die Abgrenzung der inneren Bereiche mit guten Abbildungseigenschaften zu den peripheren Bereichen, in denen höhere Fehler zugelassen werden, erfolgt üblicherweise mit einer festgelegten Sollisoastigmatismuslinie. In der Brillenoptik wird hierfür meist die Isoastigmatismuslinie, entlang weicher der Betrag des Astigmatismus gleich 0,5 dpt ist, verwendet. Vorzugsweise wird diese Linie zur Konstruktion des Astigmatismusmodells für die Sollvorgaben, wie nachfolgend im Detail beschrieben wird, herangezogen.

Um Gleitsichtgläser mit unterschiedlichen Designs (d.h. mit unterschiedlichen Sollvorgaben für die Abbildungsfehler, insbesondere für die astigmatische Abweichung) zu erzeugen, müssen die entsprechenden unterschiedlichen Design- bzw. Sollvorgaben erzeugt bzw. berechnet und nachfolgend die Optimierungen durchgeführt werden. Ein Erzeugen bzw. Berechnen eines Brillenglasdesigns im Sinne dieser Anmeldung umfaßt folglich die Berechnung bzw. Erzeugung der Sollvorgaben bzw. Sollwerte für die einzelnen Abbildungsfehler, welche dem Brillenglasdesign zuzuordnen sind, insbesondere der Sollvorgaben für die astigmatische Abweichung bzw. Sollastigmatismus.

Entgegen der üblichen Vorgehensweise werden gemäß der Erfindung die neuen Sollvorgaben aus bereits hinterlegten, älteren Sollvorgaben abgeleitet. Mit dem erfindungsgemäßen Verfahren können so aus einem bestehenden Gleitsichtglasdesign (nachfolgend als Start- oder Grunddesign bezeichnet) mit vorbekannten Sollvorgaben direkt individuelle Gleitsichtglasdesigns mit unterschiedlichen Breiten des Fern- und/oder des Nahsehbereichs und/oder niedrigen oder hohen Astigmatismusgradienten erzeugt werden. Da alle Designmodifikationen aus demselben Startdesign abgeleitet werden, erfolgt der Übergang stufenlos. Es können somit beliebig viele Designvariationen erzeugt werden, um immer optimal auf die Bedürfnisse der Kunden eingehen zu können.

Die Designmodifikation erfolgt durch geeignete Variation der Optimierungssollvorgaben des Startdesigns, insbesondere der Sollwerte für die astigmatische Abweichung bzw. Sollastigmatismuswerte.

Dazu wird zunächst ein Startdesign oder Startvorgaben festgelegt, welches/welche

- eine Vorgabe einer Hauptlinie bzw. des Verlaufs einer Hauptlinie;
- Vorgaben für Sollastigmatismuswerte $A_{soll}(u = 0, y)$ entlang der Hauptlinie; und
- Vorgaben für den Verlauf zumindest einer Basis-Sollisoastigmatismuslinie, wobei der Verlauf der Basis-Sollisoastigmatismuslinie durch eine eindimensionale Funktion der Form $u_G(y) = f(y)$ beschrieben wird,

umfaßt.

Ferner umfaßt das Startdesign oder die Startvorgaben vorzugsweise Vorgaben für den Brechwertverlauf entlang der Hauptlinie. Weitere Parameter des Startdesigns, wie:

- der maximal zulässige Sollastigmatismus in der Peripherie des Brillenglases; und/oder
- die maximale Sollisoastigmatismusline; und/oder
- die Abstände der maximalen Sollisoastigmatismusline von der Basis-Sollisoastigmatismuslinie im Fern- und Nahteil in einer vorgegebenen oder vorgebbaren Richtung

können ebenfalls vorgegeben werden.

Anhand der obigen Vorgaben kann die räumliche Verteilung der dem Startdesign zugeordneten Sollastigmatismuswerte $A_{soll}(u, y)$ mittels einer geeigneten Interpolation bestimmt werden.

Alternativ kann das Startdesign oder die Startvorgaben die räumliche Verteilung der Sollastigmatismuswerte über zumindest einen Teil des zu optimierenden Bereichs des Brillenglases umfassen. Somit sind auch der Verlauf der Hauptlinie, der Sollastigmatismuswerte entlang der Hauptlinie, der Verlauf der Basis-Sollisoastigmatismuslinie, und gegebenenfalls andere Parameter, welche dem Startdesign zugeordnet sind, eindeutig bestimmt.

Ebenfalls kann das Startdesign oder die Startvorgaben eine Startfläche, welche z.B. durch ihre Pfeilhöhen definiert ist, umfassen. Mit der Vorgabe der Startfläche sind auch der Verlauf der Hauptlinie $HL$ sowie der Basis-Sollisoastigmatismuslinie $I_G$ eindeutig vorgegeben.

Ferner können die maximal zulässigen Designänderungen im Voraus, in Abhängigkeit von dem Startdesign vorgegeben bzw. festgelegt werden.

Unter Sollastigmatismuswerten $A$ im Sinne dieser Anmeldung werden insbesondere die Sollwerte der astigmatischen Abweichung $Ast_{soll}$ oder die Sollwerte für den Astigmatismus des Brillenglases (Flächenastigmatismus oder Astigmatismus in Gebrauchsstellung) verstanden.

Insbesondere wird zur Konstruktion der Astigmatismusvorgaben bzw. zur Berechnung der Sollastigmatismusverteilung über das Brillenglas der Verlauf zumindest einer Basis-Sollisoastigmatismuslinie, vorzugsweise je einer Basis-Sollisoastigmatismuslinie auf der nasalen und temporalen Seite des Brillenglases vorgegeben. Der Betrag $A_G$ der Basis-Sollisoastigmatismuslinie kann frei gewählt werden, vorteilhaft sind Beträge zwischen 0,25 dpt und 1,0 dpt und insbesondere 0,5 dpt.

Die Hauptlinie und die Basis-Sollisoastigmatismuslinie können mathematisch mittels einer geeigneten parametrischen Darstellung vorgegeben werden. Beispielsweise kann der Verlauf der Hauptlinie $HL$ durch eine eindimensionale, vorzugsweise stetige Funktion der Form $f_u(y)$ beschrieben werden. Mit der Vorgabe der Funktion $f_u(y)$ ist die Hauptlinie definiert. Ebenfalls kann der Verlauf der Basis-Sollisoastigmatismuslinie durch eine eindimensionale Funktion der Form $u_G(y) = f(y)$ beschrieben bzw. vorgegeben werden.

Vorzugsweise ist die eindimensionale Funktion $f(y)$ eine zumindest einmal stetig differenzierbare Funktion. Ferner bevorzugt ist die erste Ableitung der Funktion $f(y)$ ebenfalls eine zumindest einmal stetig differenzierbare Funktion.

Die Hauptlinie und die räumliche Verteilung der Sollastigmatismuswerte können in einem geeigneten kartesischen Koordinatensystem mit einer horizontalen Achse $x$ und einer vertikalen Achse $y$, wie z.B. das oben beschriebenen Koordinatensystem, angegeben und berechnet werden, d.h. z.B. in einem Koordinatensystem in der zu optimierenden Fläche des Brillenglases, vorzugsweise in der augenseitigen Fläche des Brillenglases, wobei der Ursprung des Koordinatensystems beispielsweise mit dem geometrischen Mittelpunkt des (rohrunden) Brillenglases oder mit dem Zentrier- oder Anpaßpunkt des Brillenglases zusammenfällt. Die vertikale (" y ") und horizontale (" x ") Achse liegen in der tangentialen Ebene zu der jeweiligen zu optimierenden (augenseitigen oder objektseitigen, vorzugsweise augenseitigen) Fläche des Brillenglases an dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. In diesem Koordinatensystem $\{x, y\}$ kann die horizontale Koordinate $x_{HL}$ eines Punktes auf der Hauptlinie $(x_{HL}, y)$ durch eine Funktion der Form $f_u(y)$ beschrieben werden, d.h. $x_{HL} = f_u(y)$.

Es hat sich jedoch als vorteilhaft erwiesen eine Koordinatentransformation durchzuführen $(x, y) \rightarrow (u, y)$, $x=u + f_u(y)$ und $u$ den horizontalen Abstand eines Punktes $(u, y)$ von der Hauptlinie bezeichnet und alle Berechnungen in diesem Koordinatensystem durchzuführen. In diesem Koordinatensystem haben die Punkte der Hauptlinie Koordinaten $(u = 0, y)$, die Punkte der Basis-Sollisoastigmatismuslinie Koordinaten $(u_G(y), y)$ und die Punkte der abgeänderten Basis-Sollisoastigmatismuslinie Koordinaten $(u'_G(y), y)$.

Es ist jedoch selbstverständlich möglich, alle Berechnungen in dem Koordinatensystem $\{x, y\}$ oder in anderen geeigneten Koordinatensystemen durchzuführen.

In einem zweiten Schritt wird der Verlauf der Basis-Sollisoastigmatismuslinie gemäß einer vorgegebenen Transformation $\mathfrak{I}(u_G(y)) = u'_G(y)$ abgeändert, wobei:

$$A(u_G(y), y) = A(u'_G(y), y) = A_G = const.$$

In anderen Worten wird nur der Verlauf der Basis-Sollisoastigmatismuslinie verändert, nicht jedoch der konstante Betrag $A_G$ des Sollastigmatismus entlang der Basis-Sollisoastigmatismuslinie.

Zwischen der Hauptlinie und der abgeänderten Basis-Sollisoastigmatismuslinie werden die Sollastigmatismuswerte in geeigneter Weise interpoliert. Somit kann - anhand der Vorgaben des Startdesigns bzw. anhand der Startvorgaben die räumliche Verteilung der Sollastigmatismuswerte zwischen der Hauptlinie und der Basis-Sollisoastigmatismuslinie ermittelt werden. Die Sollastigmatismuswerte können beispielsweise mittels einer linearen, quadratischen oder kubischen Interpolation berechnet werden. Es ist auch eine Interpolation höherer Ordnung denkbar.

Ein beispielhaftes Berechnen bzw. Erzeugen einer Sollastigmatismusverteilung bzw. Sollastigmatismuswerte anhand des vorgegebenen Verlaufs einer Hauptlinie und des vorgegebenen Verlaufs einer Basis-Sollisoastigmatismuslinie wird nachfolgend im Detail beschrieben.

Der Verlauf der vorgegebenen Basis-Sollisoastigmatismuslinie kann - wie oben beschrieben - durch eine eindimensionale Funktion $u_G(y)$ vorgegeben werden. Selbstverständlich kann mittels des nachfolgend beschriebenen Verfahrens ebenfalls die Sollastigmatismusverteilung zwischen der vorgegebenen Hauptlinie und der abgeänderten Basis-Sollisoastigmatismuslinie berechnet werden. In diesem Fall tritt in den nachfolgenden Formeln die eindimensionale Funktion $u'_G(y)$, welche den Verlauf der abgeänderten Basis-Sollisoastigmatismuslinie $l'_G$ beschreibt, anstelle der eindimensionalen Funktion $u_G(y)$, welche den Verlauf der Basis-Sollisoastigmatismuslinie $l_G$ beschreibt.

Die Sollastigmatismuswerte können in Horizontalschnitten interpoliert werden, wobei in jedem Horizontalschnitt zwischen dem vorgegebenen Sollastigmatismuswert an der Hauptlinie $A(u = 0, y) = A_0(y)$ und dem Wert $A(u'_G(y), y) = A_G = const$ an der abgeänderten Basis-Sollisoastigmatismuslinie interpoliert wird.

Die Interpolation kann bezüglich $u$ linear, quadratisch oder durch eine beliebige Potenzfunktion erfolgen:

$$A(u, y) = A_0(y) + b(y)u^p$$

Der Koeffizient $b(y)$ kann bei vorgegebener Potenz $p$ direkt durch:

$$b(y) = \frac{A_G - A_0(y)}{u_G(y)^p}$$

bestimmt werden, wobei - wie oben beschrieben - $u_G(y)$ der horizontale Abstand der Basis-Sollisoastigmatismuslinie von der Hauptlinie ist.

Die Interpolation kann dann als

$$A(u, y) = A_0(y) + \frac{A_G - A_0(y)}{u_G(y)^p} u^p = A_0(y) + (A_G - A_0(y))\left(\frac{u}{u_G(y)}\right)^p$$

geschrieben werden.

Die Potenz $p$ wird im allgemeinen variabel vorgegeben. Je größer $p$ gewählt wird, desto flacher ist der seitliche Anstieg des Astigmatismus an der Hauptlinie. Im Progressionsbereich steigt der Astigmatismus nach dem Satz von Minkwitz generell linear, so daß in diesem Bereich $p$ vorzugsweise gleich 1 gewählt wird. Mit zunehmender Abnahme des Sollastigmatismus im Nahteil nimmt $p$ vorzugsweise ebenfalls zu, so daß der horizontale Anstieg des Soflastigmatismus langsamer erfolgt. Dies führt zu einer Aufweitung des Nahteils.

In der Peripherie des Brillenglases (d.h. zwischen der Basis-Sollisoastigmatismuslinie und dem Brillenglasrand) kann durch eine zusätzliche Vorgabe der äußersten, maximalen Sollisoastigmatismuslinie mit dem Wert $A_{max}$ und eine Vorgabe der Abstände der maximalen Sollisoastigmatismuslinien von der Basis-Sollisoastigmatismuslinie im Fern- und Nahteil, die Verteilung des Sollastigmatismus bestimmt werden.

Insbesondere können die Sollastigmatismuswerte in der Peripherie des Brillenglases mittels so genannter Parallelenkurvenmodell-Verfahren ermittelt bzw. berechnet werden.

Gemäß diesem Verfahren werden in der Peripherie des Brillenglases Parallelkurven zu der Basis-Sollisoastigmatismuslinie bzw. weitere Sollisoastigmatismuslinien, welche im wesentlichen parallel zu der Basis-Sollisoastigmatismuslinie verlaufen, konstruiert. Der senkrechte Abstand dieser Sollisoastigmatismuslinien wird durch die Vorgabe eines größten Wertes $A_{max}$ und des zugehörigen Abstandes von der Basis-Sollisoastigmatismuslinie entlang der Kurvennormalen gesteuert. Der Abstand der maximalen bzw. äußersten Sollisoastigmatismuslinie muss nicht konstant sein und kann mittels einer Abstandsfunktion $a(y)$ vorgeben werden. Je größer der Wert von a(y), desto weiter sind die Sollisoastigmatismuslinien von einander entfernt und desto weicher sind die Astigmatismusübergänge. Die Abstandsfunktion $a(y)$ kann z.B. eine einfache lineare Funktion sein, derart, daß ein Abstand im Fernteil $a_F$ und ein Abstand im Nahteil $a_N$ vorgegeben und anschließend linear in $y$ interpoliert werden.

Der Sollastigmatismuswert an einem beliebigen Punkt $P(u, y)$ in der Peripherie des Brillenglases kann z.B. wie folgt berechnet werden:

1. Ermitteln des Punkts $P_G(u_G, y_G)$ auf der Basis-Sollisoastigmatismuslinie, dessen Kurvennormale durch den Punkt $P(u, y)$ verläuft, mittels eines geeigneten numerischen Verfahrens;
2. Berechnen des Abstands $d$ der beiden Punkte $P(u, y)$ und $P_G(u_G, y_G)$:

$$d = \sqrt{(u - u_G)^2 + (y - y_G)^2}\,;$$

3. Berechnen des zugehörigen Sollastigmatismuswerts $A(u, y) = A(d, a(y_G))$ mittels einer Interpolation zwischen $A_G(d = 0)$ und $A_{max}(a(y_G))$. Diese Interpolation kann z.B. designspezifisch eine lineare, quadratische, kubische oder eine andere geeignete Interpolation sein. Vorzugsweise ist die Interpolation linear.

Alternativ können die Sollastigmatismuswerte in der Peripherie des Brillenglases nach dem so genannten Kegelstumpfmodell-Verfahren berechnet werden.

Dieses Verfahren ist insbesondere dann von Vorteil, wenn die Basis-Sollisoastigmatismuslinie beim Übergang in den Fernbereich zu stark gekrümmt ist, so daß sich die Kurvennormalen zu der Basis-Sollisoastigmatismuslinie unter Umständen schon innerhalb des Abstands $a(y)$ schneiden. In diesem Fall können nach dem oben beschriebenen Verfahren die äußeren Sollisoastigmatismuslinien nicht mehr sauber konstruiert werden, da das obige Verfahren mehr als eine Lösung liefert. Die Sollisoastigmatismuslinien werden als Höhenlinien eines Kegelstumpfes, dessen Grundfläche von der Basis-Sollisoastigmatismuslinie begrenzt wird, modelliert. Durch Vorgabe der Lage der Spitze $S(u_{SP}, y_{SP})$ des Kegelstumpfes und des zugehörigen Sollastigmatismuswerts $A_{SP}$ an der Spitze wird jedem Punkt $P(u, y)$ eindeutig ein Sollastigmatismuswert nach dem nachfolgend beschriebenen Verfahren zugewiesen

1. Ermitteln des Schnittpunkts $F(u_F, Y_F)$ der durch die Punkte $P$ und $S$ verlaufende Gerade und der Grenzkurve des Kegelstumpfes;
2. Berechnen der Abstände:

$$a_{SP} = \sqrt{(u_{SP} - u_F)^2 + (y_{SP} - u_F)^2}$$

und

$$a_P = \sqrt{(u_P - u_F)^2 + (y_P - u_F)^2} \; ;$$

3. Berechnen des Sollastigmatismuswerts $A(u, y)$ :

$$A_{KS} = A_G + (A_{SP} - A_G)\frac{a_P}{a_{SP}}$$

$$A_{soll}(u, y) = A_{soll}(p) = \min(A_{KS}, A_{max}) .$$

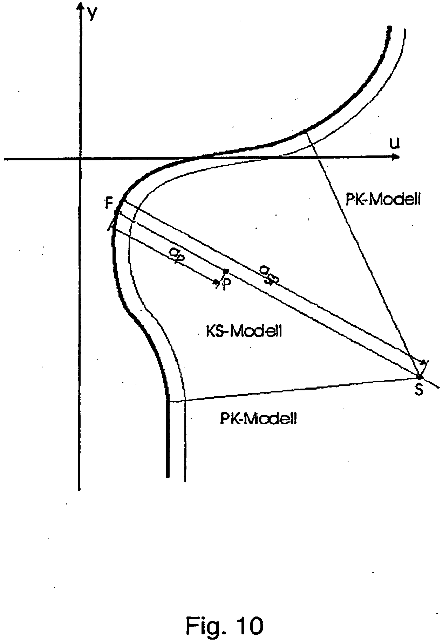

**Fig. 10** illustriert die Berechnung der Sollastigmatismuswerte in der Peripherie des Brillenglases nach dem Parallelkurvenmodell-Verfahren (in der Figur 10 bezeichnet als PK-Modell) und nach dem Kegelstumpfmodell-Verfahren (in der Figur 10 bezeichnet als KS-Modell).

Vorzugsweise wird in dem zentralen Bereich des Brillenglases das Kegelstumpfmodell-Verfahren zum Berechnen der Sollastigmatismuswerte in der Peripherie angewendet, und im Fern- und Nahteil das Parallelenkurvenmodell-Verfahren angewandt.

Mit dem erfindungsgemäßen Verfahren kann somit ein Brillenglasdesigner beliebige Gleitsichtglasdesigns bzw. beliebige Verteilungen des Sollastigmatismus schnell und effizient erzeugen bzw. verändern. Insbesondere ist es mit dem erfindungsgemäßen Verfahren möglich, bei einem bestehenden Gleitsichtglasdesign (Start- bzw. Grunddesign) die Designcharakteristik schnell und effizient abzuändern und an die Kundenbedürfnisse anzupassen. Ferner ist es möglich, durch eine relativ einfache und schnell durchzuführende Berechnung aus nur einem vorgegebenen Startdesign, Varianten bzw. Designs mit größeren oder kleineren Sehbereichen (z.B. mit großem oder kleinem Fernteil, breitem oder engem Nahteil), mit niedrigen oder hohen Astigmatismusgradienten zu erzeugen. Ein wesentlicher Vorteil ist folglich die Vermeidung des oben beschriebenen Mehraufwands zur Erstellung geeigneter Sollvorgaben, insbesondere für individuelle progressive Brillengläser. Ein weiterer Vorteil ist die Möglichkeit, die Sehbereiche im Rahmen vorgegebener Grenzen beliebig und stufenlos einzustellen, ohne daß die Designcharakteristik und die guten Abbildungseigenschaften des Startdesigns verloren gehen. Somit können beliebig viele Designvariationen erzeugt werden, um immer optimal auf die Bedürfnisse der Kunden einzugehen. Ferner können mit dem erfindungsgemäßen Vorgehen erst kurz vor der Optimierung eines Brillenglases die Koeffizienten zur Erzeugung der Sollvorgaben anhand von zusätzlichen Parametern angepaßt werden. Es ist daher möglich, daß rasch geeignete Anwendungsdesigns aus einem Grund- oder Startdesign abgeleitet werden. Da mit dem erfindungsgemäßen Verfahren unterschiedliche Designvarianten schnell und effizient erzeugt und gegeneinander getestet werden können, kann der Aufwand für die Entwicklung und Herstellung von konventionellen, wirkungsoptimierten oder individuellen progressiven Brillengläsern erheblich reduziert werden.

Das erfindungsgemäße Verfahren eignet sich besonders für einen per Datenbank gesteuerten Berechnungsablauf.

Das erfindungsgemäße Verfahren ist insbesondere zum Generieren von individuellen, für unterschiedliche Anwendungsgebiete angepaßten Designs, wie z.B.:

- Gleitsichtgläser mit großem, breitem Fernteil für Kraftfahrer;
- Sport-Gleitsichtgläser mit großem Fernteil, reduzierter Addition und kleinen Gradienten (Gläser für dynamische Tätigkeiten);
- Gläser mit breitem Nahteil und Arbeitsschwerpunkt bei Abstand 40cm.
- diverse Bildschirmarbeitsplatzgläser und Nah- und Raumgläser,

sowie zum Herstellen von individuellen Brillengläsern nach dem generierten Design, besonders geeignet.

Die Basis-Sollisoastigmatismuslinie $u_G(y)=f(y)$ kann in unterschiedlichen Bereichen unterteilt werden. Vorzugsweise wird die Basis-Sollisoastigmatismuslinie in drei Bereiche (Fernbereich, .Progressionsbereich und Nahbereich) durch die Vorgabe von zwei vertikalen Koordinaten $y_F$ und $y_N$ unterteilt.

Im Progressionsbereich (d.h. bei $y_N \leq y \leq y_F$) kann der Verlauf der Basis-Sollisoastigmatismuslinie direkt vorgegeben oder zum Beispiel entweder nach dem Satz von Minkwitz bei vorgegebenem Brechwertverlauf entlang der Hauptlinie oder aus einer vorgegebenen Startfläche, welche z.B. in dem StartDesign umfaßt ist, berechnet werden. Insbesondere kann nach dem Satz von Minkwitz der seitliche Anstieg des Astigmatismus durch den Brechwertanstieg entlang der Hauptlinie bestimmt werden. Somit können auch die horizontalen Abstände der Punkte der Grenzlinie von der Hauptlinie bzw. die $u$ -Koordinaten der Basis-Sollisoastigmatismuslinie bestimmt werden.

Im Fern- und/oder Nahbereich kann die Weiterführung bzw. der Verlauf der Basis-Sollisoastigmatismuslinie unabhängig vorgegeben bzw. (in bestimmten vorgegebenen Grenzen) frei und stufenlos abgeändert werden und damit die Designfestlegung getroffen werden.

Vorzugsweise wird die Basis-Sollisoastigmatismuslinie im Progressionsbereich (d.h. bei $y_N \leq y \leq y_F$) nicht transformiert. Somit behält das abgeleitete individuelle Design die charakteristische Eigenschaft des Brechwertverlaufs und damit verbundene minimale Breite des Progressionskanals des Startdesigns.

Weiter bevorzugt umfaßt das Startdesign ferner eine Vorgabe für den Verlauf einer zusätzlichen Sollisoastigmatismuslinie im Fern- und/oder Nahteil bzw.-bereich, wobei der Verlauf der zusätzlichen Sollisoastigmatismuslinie durch eine eindimensionale Funktion der Form $u_Z(y) = f_Z(y)$ beschrieben wird. Die Transformation des Startdesigns umfaßt ferner ein Abändern des Verlaufs der zusätzlichen Sollisoastigmatismuslinie des Startdesigns, wobei die Interpolation zwischen den Sollastigmatismuswerten auf der Hauptlinie und den Sollastigmatismuswerten auf der abgeänderten Basis-Sollisoastigmatismuslinie

- eine Interpolation zwischen den Sollastigmatismuswerten $A(u = 0, y)$ auf der Hauptlinie und den Sollastigmatismuswerten $A(u'_Z(y), y)$ auf der abgeänderten zusätzlichen Sollisoastigmatismuslinie; und
- eine Interpolation zwischen den Sollastigmatismuswerten auf der abgeänderten zusätzlichen Sollisoastigmatismuslinie $A(u'_Z(y), y)$ und den Sollastigmatismuswerten auf der abgeänderten Basis-Sollisoastigmatismuslinie $A(u'_G(y), y)$

umfaßt.

Hier bezeichnen:

$u_Z(y)$     den horizontalen Abstand von der Hauptlinie eines Punktes ($u_Z(y)$, y) auf der zusätzlichen Sollisoastigmatismuslinie des Stardesigns; und

$u'_Z(y)$     den horizontalen Abstand von der Hauptlinie eines Punktes ($u'_Z(y)$, y) auf der abgeänderten zusätzlichen Sollisoastigmatismuslinie.

Vorzugsweise ist die eindimensionale Funktion $f_Z(y)$ zumindest einmal stetig differenzierbar.

Der Verlauf der zusätzlichen Sollisoastigmatismuslinie des Startdesigns kann gemäß einer vorgegebenen Transformation $\mathfrak{S}_Z(u_Z(y)) = u'_Z(y)$ erfolgen, wobei

$$A(u_Z(y), y) = A(u'_Z, y) = A_Z = const.$$

Insbesondere im Fernteil kann die Interpolation durch eine zusätzliche, zweite Sollisoastigmatismuslinie (z.B. $I_{Z=0,25}$ bzw. $A_Z = 0{,}25$ dpt) feiner gesteuert werden. In diesem Fall wird erst zwischen der Hauptlinie und der zweiten zusätzlichen Sollisoastigmatismuslinie und anschließend zwischen der zweiten, zusätzlichen Sollisoastigmatismuslinie und Basis-Sollisoastigmatismuslinie interpoliert. Die zusätzliche, zweite Sollisoastigmatismuslinie kann analog zur Basis-Sollisoastigmatismuslinie vorgegeben und berechnet bzw. abgeändert werden. Die Interpolation zwischen den Sollastigmatismuswerten $A(u = 0, y)$ auf der Hauptlinie und den Sollastigmatismuswerten $A(u'_Z(y), y)$ auf der abgeänderten zusätzlichen Sollisoastigmatismuslinie erfolgt analog zu der Interpolation zwischen den Sollastigmatismuswerten $A(u = 0, y)$ auf der Hauptlinie und den Sollastigmatismuswerten $A(u'_G(y), y)$ auf der abgeänderten Basis-Sollisoastigmatismuslinie.

Die Basis-Sollisoastigmatismuslinie verläuft durch einen ersten vorgegebenen oder vorgebbaren *Steuerpunkt* $\overline{r}_1 = (u_1, y_1)$. Das Abändern des Verlaufs der Basis-Sollisoastigmatismuslinie umfaßt die Schritte:

- Verschieben des ersten *Steuerpunkts* $\overline{r}_1 \rightarrow \overline{r}_1(u'_1, y'_1)$ entlang einer vorgegebenen bzw. vorgebbaren Kurve; und
- Berechnung der abgeänderten Basis-Sollisoastigmatismuslinie derart, daß diese durch den verschobenen ersten Steuerpunkt $\overline{r}_1(u'_1, y'_1)$ verläuft.

Die vorgegebene bzw. vorgebbare Kurve $u \rightarrow y$, $K:u \rightarrow k(u)$, entlang welcher der erste Steuerpunkt verschoben wird, kann eine beliebige Kurve sein. Vorzugsweise ist die Kurve eine Gerade.

Die Basis-Sollisoastigmatismuslinie kann ferner durch einen zweiten vorgegebenen oder vorgebbaren Steuerpunkt $\bar{r}_2 = (u_2, y_2)$ verlaufen, wobei das Abändern des Verlaufs der Basis-Sollisoastigmatismuslinie ferner die Schritte

- Verschieben des zweiten Steuerpunkts $\bar{r}_2 \rightarrow \bar{r}_2 (u'_2, y'_2)$ entlang einer vorgegebenen bzw. vorgebbaren Kurve; und
- Berechnung der abgeänderten Basis-Sollisoastigmatismuslinie derart, daß diese durch den verschobenen zweiten Steuerpunkt $\bar{r}_2 (u'_2, y'_2)$ verläuft

umfaßt.

Ebenfalls kann die Kurve, entlang welcher der zweite Steuerpunkt verschoben werden kann eine beliebige Kurve sein. Vorzugsweise ist diese Kurve eine Gerade.

Es ist auch möglich, dass die Basis-Sollisoastigmatismuslinie durch weitere Steuerpunkte verläuft. Die weiteren Steuerpunkte können entlang entsprechenden vorgegebenen bzw. vorgebbaren Kurven verschoben werden, wobei die Berechnung der abgeänderten Basis-Sollisoastigmatismuslinie derart erfolgt, dass diese durch die verschobenen Steuerpunkte verläuft.

Ferner bevorzugt verlaufen die Basis-Sollisoastigmatismuslinie und die abgeänderte Basis-Sollisoastigmatismuslinie durch zumindest einen vorgegebenen oder vorgebbaren Angel- bzw. Fixpunkt $\bar{r}_0 = (u_0, y_0)$, wobei im Angel- bzw. Fixpunkt die Bedingungen:

$$u_G(y_0) = u'_G(y_0)$$

$$\frac{du_G(y_0)}{dy} = \frac{du'_G(y_0)}{dy}$$

erfüllt sind.

Der erste und gegebenenfalls weitere Steuerpunkte können frei z.B. in Abhängigkeit von den individuellen Präferenzen des Brillenträgers oder automatisch anhand von erfaßten individuellen Kundendaten, wie zum Beispiel Kundenpräferenzen, Gewichtungen der einzelnen Präferenzen, Anwendungsschwerpunkte, Fassungseigenschaften und/oder anderer Parameter verschoben werden. Vorzugsweise wird die maximale zulässige Verschiebung des jeweiligen Steuerpunktes nach außen (d.h. in Richtung zur Hauptlinie) und/oder nach innen (d.h. in die Richtung zur Peripherie des Brillenglases bzw. des Brillenglasrandes) vorgegeben.

Die Orientierung der Kurven und insbesondere der Geraden, entlang welcher der jeweilige Steuerpunkt verschoben werden kann, kann beliebig sein. Vorzugsweise fällt die Gerade, entlang welcher sich der jeweilige Steuerpunkt bewegt bzw. sich bewegen kann, mit den Kurvennormalen zusammen.

Aus den Daten bezüglich der Position des verschobenen Steuerpunkts bzw. der Steuerpunkte sowie gegebenenfalls anhand von Daten bezüglich des Verlaufs des Basis-Sollisoastigmatismuslinie in dem Progressionsbereich lassen sich eindeutig die Parameter der abgeänderten Basis-Sollisoastigmatismuslinie und somit eindeutig der Verlauf der abgeänderten Basis-Sollisoastigmatismuslinie bestimmen. Da der zentrale Bereich der Basis-Sollisoastigmatismuslinie (d.h. der Progressionsbereich) aus dem Brechwertverlauf entlang der Hauptblicklinie abgeleitet wird, reichen bei einer geeigneten parametrischen Darstellung der Basis-Sollisoastigmatismuslinie in der Regel ein oder zwei Steuerpunkte jeweils in dem Fern- und/oder Nahteil aus, um den Verlauf der Basis-Sollisoastigmatismuslinie entsprechend abzuändern bzw. den Verlauf der abgeänderten Basis-Sollisoastigmatismuslinie eindeutig zu bestimmen.

Somit ist es möglich, in einfacher und effizienter Weise die Größe der Sehbereiche z.B. in Abhängigkeit von den individuellen Kundenpräferenzen, Einsatzgebieten des Brillenglases (Sport, Lesen, etc.) und/oder anderen individuellen Kundenparameter abzuändern und an die jeweilige individuelle Gebrauchssituation anzupassen.

Soll z.B. der Nahteil verbreitert werden, können die Steuerpunkte im Nahteil weiter nach außen verschoben werden und umgekehrt. Soll ein sehr ausgewogenes Brillenglasdesign erzeugt werden, dann können die Steuerpunkte etwas nach innen verschoben werden. Soll z.B. aus einem ausgewogenen Startdesign mit Arcustangens-Darstellung im Fernteil ein sportliches Design mit einem großen, breiten Fernteil erzeugt werden, dann wird die Nahteilbreite reduziert und das Fernteil maximal vergrößert. Zusätzlich kann von der Arcustangens-Darstellung auf eine andere Darstellung, z.B. eine Polynomdarstellung, umgeschaltet werden, um z.B. keine seitlichen Blickfeldeinschränkungen bei großen Fassungen zu haben.

Die maximal zulässigen Designänderungen können im Voraus, in Abhängigkeit vom Startdesign, festgelegt werden.

Nachfolgend wird das Vorgehen bei dem Verschieben eines Steuerpunktes am Beispiel des Nahteilsteuerpunktes näher erläutert.

In diesem Beispiel wird der Nahteilsteuerpunkt $\bar{r}_1 = (u_1, y_1)$ entlang einer Gerade nach außen (d.h. Richtung Peripherie) oder nach innen (d.h. Richtung Hauptlinie) verschoben:

$$\vec{r}\,'_1 = \vec{r}_1 + t\vec{v}_a$$

$$\vec{r}\,'_1 = \vec{r}_1 + t\vec{v}_i$$

Hier bezeichnet:

$\bar{v}_a$    den Richtungsvektor nach außen der Geraden, entlang welcher sich der Nahteilsteuerpunkt bewegt bzw. bewegen kann; und

$\bar{v}_i$    den Richtungsvektor nach innen der Geraden, entlang welcher sich der Nahteilsteuerpunkt bewegt bzw. bewegen kann; und

$t$    die Verschiebung entlang der Gerade mit dem Richtungsvektor $\bar{v}_{a,i}$.

Es ist selbstverständlich möglich, den Steuerpunkt in entsprechender Weise entlang anderen Kurven zu verschieben.

Hierbei kann die Verschiebung $t$ und somit die Sehfeldgrößen begrenzt werden, wobei $t_a$ die maximal zulässige Abweichung nach außen und $t_i$ die maximal zulässige Abweichung nach innen bezeichnet. Eine maximale Sehfeldgröße, z.B. im Nahteil, bedeutet dann, daß der Steuerpunkt $\bar{r}_1$ ganz nach außen (d.h. Richtung Peripherie) entlang der Geraden $\bar{v}_a$ verschoben wird ($\bar{r}_1 = \bar{r}_1 + t\bar{v}_a$). Eine minimale Sehfeldgröße, z.B. im Nahteil, bedeutet entsprechend, daß der Steuerpunkt $\bar{r}_1$, ganz nach innen (d.h. Richtung Hauptlinie) entlang der Geraden $\bar{v}_i$ verschoben wird ($\bar{r}_1 = \bar{r}_1 + t\bar{v}_i$).

Wenn die Position der Steuerpunkte des individuellen Designs festgelegt ist, wird die die Basis-Sollisoastigmatismuslinie derart abgeändert, daß diese durch den transformierten bzw. verschobenen Steuerpunkt bzw. Steuerpunkte verläuft. Nach der Abänderung der Steuerpunkte und somit des Verlaufs der Basis-Sollisoastigmatismuslinie werden die Sollvorgaben für die Astigmatismusverteilung wie oben beschrieben mittels einer Interpolation bestimmt bzw. berechnet.

Die Basis-Sollisoastigmatismuslinie kann durch eine Reihe von geeigneten, eindimensionalen, vorzugsweise zumindest einmal stetig differenzierbaren Funktionen $f(y)$ beschrieben werden. Es hat sich überraschenderweise herausgestellt, daß die Funktion $f(y)$ bereits mittels wenigen, variierbaren Parametern geeignet beschrieben werden kann, was die Berechnung und die Transformation des Startdesigns erheblich vereinfacht und beschleunigt.

Vorzugsweise wird der Verlauf der Basis-Sollisoastigmatismuslinie im Nahteil bzw. -bereich durch die Funktion:

$$u_G(y) = a_n + \frac{b_n}{y} + \frac{c_n}{y^2} + \frac{d_n}{y^3}$$

mit den Parametern bzw. Koeffizienten $a_n$, $b_n$, $c_n$, $d_n$ beschrieben bzw. vorgegeben.

Im Fernteil wird der Verlauf der Basis-Sollisoastigmatismuslinie vorzugsweise durch ein Polynom der Ordnung $n$ :

$$u_G(y) = a_f + b_f y + c_f y^n$$

mit den Parametern bzw. Koeffizienten $a_f$, $b_f$, $c_f$ beschrieben bzw. vorgegeben werden (nachfolgend auch kurz Polynom-Darstellung genannt).

Eine Funktion dieser Art ist insbesondere zur Beschreibung eines harten Designs geeignet.

Alternativ kann im Fernteil der Verlauf der Basis-Sollisoastigmatismuslinie durch die Funktion:

$$u_G(y) = a + b(\text{atan}(\frac{y-c}{d}) + \frac{\pi}{2})$$

mit den Parametern bzw. Koeffizienten $a,b,c,d$ beschrieben bzw. vorgegeben werden (nachfolgend auch kurz Arctangens-Darstellung genannt). Eine solche Funktion ist insbesondere zur Beschreibung eines weichen Designs geeignet.

Nachfolgend wird beispielhaft das Abändern der Basis-Sollisoastigmatismuslinie im Nahbereich in Detail erläutert.

Wie bereits oben dargelegt wurde, kann die Basis-Sollisoastigmatismuslinie im Nahteil beispielsweise durch eine Funktion der Form:

$$u_G(y) = a_n + \frac{b_n}{y} + \frac{c_n}{y^2} + \frac{d_n}{y^3}$$

mit den Parametern bzw. Koeffizienten $a_n$, $b_n$, $c_n$, $d_n$ beschrieben werden.

Die erste Ableitung dieser Funktion ist

$$\frac{du_G(y)}{dy} = -\frac{b_n}{y^2} - \frac{2c_n}{y^3} - \frac{3d_n}{y^4}.$$

Die Basis-Sollisoastigmatismuslinie verläuft durch einen ersten vorgegebenen oder vorgebbaren Steuerpunkt $\bar{r}_n(u_n, y_n)$ im Nahteil. Dieser Punkt wird wie oben beschrieben verschoben $\bar{r}_n(u_n, y_n) \rightarrow \bar{r}'_n(u'_n, y'_n)$.

Die abgeänderte Basis-Sollisoastigmatismuslinie hat folglich die Form:

$$u'_G(y) = a'_n + \frac{b'_n}{y} + \frac{c'_n}{y^2} + \frac{d'_n}{y^3}.$$

Der Parameter bzw. Koeffizient $a_n = a'_n$ wird vorzugsweise vorgegeben bzw. geeignet festgelegt.

Vorzugsweise wird der Verlauf der Basis-Sollisoastigmatismuslinie in dem Progressionsbereich, welcher sich zwischen einer vertikalen Koordinate $y_N$ (an der Grenze zum Nahbereich) und einer vertikalen Koordinate $y_F$ (an der Grenze zum Fernbereich) erstreckt, nicht abgeändert, so daß in diesem Bereich (d.h. zwischen $y_N$ und $y_F$) die Basis-Sollisoastigmatismuslinie des Startdesigns und die Basis-Sollisoastigmatismuslinie des abgeleiteten, individuellen Designs zusammenfallen. Der Punkt $(u, y = y_N)$ stellt einen Angel- bzw. Fixpunkt dar.

Da der Verlauf der Basis-Sollisoastigmatismuslinie des Startdesigns vorgegeben ist, lassen sich anhand der Daten des Verlaufs der Basis-Sollisoastigmatismuslinie des Startdesigns im Progressionsbereich vorgegeben durch den Abstand $u$ der Basis-Sollisoastigmatismuslinie von der Hauptlinie sowie die erste Ableitung bei $y = y_N$ berechnen.

Anhand dieser Daten sowie der Daten der Koordinaten des verschobenen Steuerpunkts (d.h. $u'_G$ im Punkt $\bar{r}_n'$) können die restlichen Parameter der abgeänderten Basis-Sollisoastigmatismusfinie und somit der Verlauf der abgeänderten Basis-Sollisoastigmatismuslinie im Nahbereich durch Lösung des folgenden Systems linearer Gleichungen eindeutig berechnet werden:

$$u'_G(y = y_N) = u_G(y = y_N)$$

$$\frac{du'_G(y = y_N)}{dy} = \frac{du_G(y = y_N)}{dy}$$

$$u'_G (y = y'_n) = u'_n = a'_n + \frac{b'_n}{y'_n} + \frac{c'_n}{{y'_n}^2} + \frac{d'_n}{{y'_n}^3}$$

Der Verlauf der Basis-Sollisoastigmatismuslinie im Fernteil eines harten Designs läßt sich ebenfalls in der Regel durch die Vorgabe und Manipulation eines Steuerpunktes ändern. Insbesondere kann die Basis-Sollisoastigmatismuslinie im Fernteil im durch eine Funktion

$$u_G(y) = a_f + b_f y + c_f y^n.$$

mit den Parametern bzw. Koeffizienten $a_f$, $b_f$, $c_f$ beschrieben werden.

Die erste Ableitung dieser Funktion ist:

$$\frac{du_G(y)}{dy} = b_f + nc_f y^{n-1}.$$

Die Basis-Sollisoastigmatismuslinie weist einen ersten vorgegebenen oder vorgebbaren Steuerpunkt $\bar{r}_f(u_f, y_f)$ im Fernteil auf. Dieser Punkt wird wie oben beschrieben verschoben: $\bar{r}_f(u_f, y_f) \rightarrow \bar{r}'_f(u'_f, y'_f)$. Der Punkt $(u, y = y_F)$ stellt einen Angel- bzw. Fixpunkt dar.

Die abgeänderte Basis-Sollisoastigmatismuslinie hat die Form:

$$u'_G (y) = a'_f + b'_f y + c'_f y^n.$$

Die Potenz $n$ des Polynoms wird in der Regel vorgegeben bzw. geeignet festgelegt.

Die Parametern bzw. Koeffizienten der abgeänderten Basis-Sollisoastigmatismuslinie können beispielsweise durch Lösung des folgenden Systems von Gleichungen eindeutig bestimmt werden, wobei im Progressionsbereich der Verlauf der Basis-Sollisoastigmatismuslinie unverändert bleibt:

$$u'_G (y = y_F) = u_G(y = y_F)$$

$$\frac{du'_G (y = y_F)}{dy} = \frac{du_G(y = y_F)}{dy}$$

$$u'_G (y = y'_f) = u'_f = a'_f + b'_f y'_f + c'_f {y'_f}^n$$

Bei einem durch eine Funktion der Form

$$u_G(y) = a + b(\mathrm{atan}(\frac{y-c}{d}) + \frac{\pi}{2})$$

mit den Parametern bzw. Koeffizienten $a$, $b$, $c$, $d$ beschriebenen Fernteil eines weichen Designs reichen in der Regel zwei vorgegebene Steuerpunkte $\bar{r}_{f1}(u_{f1}, y_{f1})$ und $\bar{r}_{f2} (u_{f2}, y_{f2})$ im Fernteil bzw. -bereich aus, um den Verlauf der abgeänderten Basis-Sollisoastigmatismuslinie eindeutig zu bestimmen. Die zwei Steuerpunkte werden wie oben beschrieben verschoben:

$$\vec{r}_{f1}(u_{f1}, y_{f1}) \rightarrow \vec{r}'_{f1}(u'_{f1}, y'_{f1})$$

$$\vec{r}_{f2}(u_{f2}, y_{f2}) \rightarrow \vec{r}'_{f2}(u'_{f2}, y'_{f2}).$$

Die Parameter bzw. Koeffizienten *a'*, *b'*, *c'*, *d'* der abgeänderten Basis-Sollisoastigmatismuslinie und somit deren Verlauf im Fernteil können durch Lösung des folgenden Systems von Gleichungen eindeutig bestimmt werden:

$$u'_G(y = y_F) = u_G(y = y_F)$$

$$\frac{du'_G(y = y_F)}{dy} = \frac{du_G(y = y_F)}{dy}$$

$$u'_G(y = y'_{f1}) = u'_{f1} = a' + b'(\mathrm{atan}(\frac{y'_{f1} - c'}{d'}) + \frac{\pi}{2})$$

$$u'_G(y = y'_{f2}) = u'_{f2} = a' + b'(\mathrm{atan}(\frac{y'_{f2} - c'}{d'}) + \frac{\pi}{2}),$$

wobei der Punkt *y = y_F ein* Angel- bzw. Fixpunkt ist.

Der Verlauf der Basis-Sollisoastigmatismuslinie kann z.B. direkt bzw. manuell von dem Brillenglasdesigner oder automatisch anhand von individuellen Daten des Brillenträgers geeignet abgeändert werden, um eine optimale Anpassung der Sehbereiche (z.B. Fern- und/oder Nahbereich) an die individuellen Erfordernisse des jeweiligen Brillenträgers zu erzielen. Vorzugsweise erfolgt die Abänderung des Verlaufs der Basis-Sollisoastigmatismuslinie wie oben beschrieben mittels einer Abänderung der Position zumindest eines Steuerpunktes, wobei die Abänderung der Position des zumindest eines Steuerpunktes automatisch anhand von individuellen Daten des Brillenträgers erfolgt.

Die individuellen Daten des Brillenträgers, welche bei dem Abändern des Verlaufs der Basis-Sollisoastigmatismuslinie bzw. der Position der Steuerpunkte berücksichtigt werden, umfassen vorzugsweise Daten bezüglich

- der Gewichtung des Fern- und Nahbereichs und/oder
- der Anwendungsschwerpunkte der Brille und/oder
- Fassungs- und Zentrierdaten.

Insbesondere kann der Verlauf der Basis-Sollisoastigmatismuslinie bzw. die Position des zumindest eines Steuerpunktes anhand von individuellen Präferenzen und Anforderungen des Brillenträgers, wie z.B. Präferenzen bezüglich der Größen des Fern- und/oder Nahbereichs, Gewichtung der Sehbereiche (Fern-, Nah- und Zwischen- bzw. Progressionsbereich), Anwendungsschwerpunkte, und/oder Fassungs- und Zentrierdaten, insbesondere Scheibenhöhe und Zentrierhöhe, Fassungsform) automatisch transformiert werden.

Wenn die Position der Steuerpunkte des individuellen Designs festgelegt ist, wird der Verlauf der Basis-Sollisoastigmatismusiinie derart abgeändert, daß diese durch den verschobenen Steuerpunkt bzw. Steuerpunkte verläuft.

Die individuellen Daten des Brillenträgers, welche bei der Bestimmung bzw. Berechnung des Verlaufs der abgeänderten Basis-Sollisoastigmatismuslinie bzw. der Position des zumindest eines Steuerpunktes berücksichtigt werden, können ferner ein oder mehrere der folgenden Daten bzw. Datensätze umfassen:

- Daten bezüglich der Hauptnutzung des Brillenglases (z.B. Autofahren, Computerarbeitsplatz, Lesen, Handwerken, etc); und/oder
- Daten bezüglich des bisher getragenen Brillenglases, insbesondere ob das bisherige Brillenglas ein Einstärken-, Bifokal- oder Gleitsichtbrillenglas ist, Daten bezüglich des Designs (Hart/Weich), der Progressionslänge, des Typs (Individuell, Konventionell), des Materials (Kunststoff/Silikat), des Brechungsindexes, der Lage der Bezugspunkte, der Addition des Vorgängerglases, und/oder der Veränderung der Refraktionsdaten im Vergleich zu den Refraktionsdaten des Vorgängerglas, und/oder

- Daten bezüglich der Verbesserungswünsche gegenüber der bisher getragenen Brille, insbesondere größerer Fernbereich, größerer Zwischenbereich, größerer Nahbereich, geringere Blicksenkung beim Lesen oder geringere Schaukelbewegung; und/oder
- Daten bezüglich der Umwelteinflüsse (Umgebungshelligkeit etc.); und/oder
- Refraktionsdaten bzw. Wirkungsparameter, insbesondere Sphäre, Zylinder, Achslage, Addition; und/oder
- Individualparameter des Brillenträgers und der individuellen Gebrauchsstellung des Brillenglases bzw. der Brille vor den Augen des Brillenträgers. Die individuellen Parameter umfassen insbesondere die Pupillendistanz, den Hornhautscheitelabstand (HSA), Vorneigung (VN), Fassungsscheibenwinkel (FSW), etc.; und/oder
- Daten bezüglich der Hauptblickrichtung Ferne und Nähe;
- Daten bezüglich eventuell vorhandener individueller, außergewöhnlicher Kopf- und Körperhaltungen; und/oder
- Physiologische Parameter, insbesondere des Auges bzw. der Augen des Brillenträges, insbesondere Sehschärfe mit Korrektion, Stereogrenzwinkel; und/oder
- Daten bezüglich der individuellen Objektabstände, insbesondere Arbeitsabstand beim Lesen (Naharbeit), Arbeitsabstand in der Ferne; und/oder
- Daten bezüglich der Objektabstände bei der Refraktionsbestimmung: Ferne und Nähe.

Die individuellen Daten des Brillenträgers können ferner weitere individuelle Parameter umfassen.

Vorzugsweise umfaßt das Verfahren ferner einen Schritt des Erfassens von individuellen Parametern des Brillenträgers.

Die individuellen Daten eines Brillenträgers, d.h. die individuellen Parameter und/oder die individuellen Anforderungen eines Brillenträgers können z.B. mit einem Beratungstool wie "Consulting FreeSign®" der Firma Rodenstock GmbH sehr detailliert abgefragt werden. Vorzugsweise werden die möglichen individuellen Designvorschläge bzw. Designumsetzungen dem Kunden direkt demonstriert. Bisher wurde die Umsetzung der individuellen Anforderungen der Kunden bezüglich der Sehbereiche in entsprechende flexible Glasdesigns nicht zufriedenstellend gelöst. In der Regel mußte auf Spezialdesigns, wie z.B. "Impression Sport extracurved" der Firma Rodenstock GmbH, ausgewichen werden, welche jedoch nicht alle Nahentfernungen und Basiskurven abdecken. Durch die vorliegende Erfindung ist es möglich, gezielt einzelne Sehbereiche durch Abändern der Sollvorgaben zu betonen. So kann z.B. eine seitliche Aufweitung des Nahbereichs durchgeführt werden, welche beispielsweise mit einer Verkleinerung des Fernbereichs oder einer Erhöhung der Gradienten der Soll-Isoastigmatismuslinien im Fern- und/oder Nahbereich - je nach Kundenanforderungsprofil (Hohe Gewichtung Dynamik oder Fernteil) - kombiniert werden kann.

Vorzugsweise umfaßt die Transformation des Startdesigns ferner eine Transformation (z.B. eine Streckung oder eine Stauchung in vertikaler Richtung) der mittels Interpolation berechneten Sollastigmatismuswerte in Abhängigkeit von einer variabel einstellbaren, (individuellen) vertikalen Position des Fern- und/oder Nahbezugspunkts, welche derart erfolgt, daß das zu berechnende Brillenglasdesign die geforderte, vertikale Position des Fern- und/oder Nahbezugspunkts aufweist. Eine solche Transformation ist in der Patentanmeldung PCT/EP 2008/000585 beschrieben.

Dabei weist ein Brillenglasdesign eine vorgegebene räumliche Position des Fern- und/oder Nahbezugspunkts auf, wenn in dem jeweiligen Bezugspunkt die vorgeschriebenen bzw. für den Brillenträger erforderlichen Werte für die Fern- und/oder Nahteilwirkungen (welche z.B. mittels Refraktionsbestimmung ermittelt werden) erreicht werden. Anders ausgedrückt sollen im Fern- und/oder Nahbezugspunkt die dem Design zugeordneten Abbildungsfehler (insbesondere astigmatische Abweichung und Refraktionsfehler) möglichst klein (vorzugsweise im wesentlichen Null) sein.

Somit kann zusätzlich direkt ein Gleitsichtglasdesign mit beliebiger vertikaler Lage der Bezugspunkte für die Ferne und die Nähe (Fern- und Nahbezugspunkt) und Hauptsehbereiche unter Beibehaltung der Designcharakteristik des Startdesigns abgeleitet und optimiert werden. Hierzu genügt es, lediglich die gewünschte individuelle Lage der Bezugspunkte für Ferne $B_F$ und Nähe $B_N$ vorzugeben. Die vertikale Position und Länge der Progressionszone der Gleitsichtfläche wird automatisch an die individuelle Benutzersituation angepaßt. Dabei kann eine beliebige Position der Bezugspunkte für Ferne $B_F$ und Nähe $B_N$ bei der Optimierung des Brillenglases berücksichtigt werden.

In gleicher Weise können ebenfalls andere Sollvorgaben des Startdesigns (z.B. Sollvorgaben für den Refraktionsfehler, Vergrößerung, etc.) geeignet transformiert bzw. geändert werden.

Ebenfalls kann das Startdesign ferner eine Vorgabe für eine Objektabstandsfunktion entlang der Hauptlinie des Brillenglases umfassen. Vorzugsweise umfaßt das Verfahren zum Berechnen eines individuellen Designs ferner eine geeignete Transformation der Objektabstandsfunktion des Startdesigns. Vorzugsweise werden die Transformationskoeffizienten der Transformation der Objektabstandsfunktion mittels einer Newtoniteration derart bestimmt, daß der Brechwert des Brillenglases in dem Fern- und/oder dem Nahbezugspunkt des individuellen Brillenglasdesigns mit dem Brechwert des Brillenglases in dem Fern- und/oder dem Nahbezugspunkt des Startdesigns übereinstimmt. Eine geeignete Transformation der Objektabstandsfunktion ist in der oben genannten Patentanmeldung PCT/EP 2008/000585 beschrieben.

Ferner bevorzugt umfaßt die Transformation des Startdesigns ferner eine Multiplikation der Sollastigmatismuswerte mit einem Skalierungsfaktor $l/l_D$, mit einer Funktion $h = h(S'(y'),l_D/l)$ oder mit einer Funktion $h = h(l_D/l)$, wobei $l$ die Progressionslänge des individuellen Brillenglasdesign und $l_D$ die Progressionslänge des Startdesigns bezeichnen. Vorzugsweise ist $h(l_D/l) = a \cdot (l_D/l) + b$, wobei $a,b$ Konstanten sind.

Ebenfalls kann die Transformation des Startdesigns ferner eine Multiplikation der Sollastigmatismuswerte (Start-Sollastigmatismuswerte oder die mittels Interpolation ermittelten Sollastigmatismuswerte) mit einem Skalierungsfaktor:

$$s = t\frac{Add}{Add_B}\ \text{umfassen.}$$

Hier bezeichnet:

$t$ einen Faktor, welcher im Allgemeinen eine Funktion $t = t(Add, F, Add_B)$ der Addition $Add$ des zu berechnenden Brillenglases bzw. Brillenglasdesigns;
und/oder der Fernteilwirkung $F$ und/oder einer vorgegebenen Basisaddition $Add_B$ ist, wobei $t = 1$ für $Add = Add_B$ gilt. Im einfachsten Fall kann $t = 1$ sein.

Beispielsweise kann das Startdesign eine Start-Sollastigmatismusverteilung für die Basisaddition $Add_B$ umfassen. Diese Start-Sollastigmatismusverteilung kann zunächst umskaliert werden, um eine Sollastigmatismusverteilung für eine Addition $Add$ zu erhalten, wobei $Add$ die Addition des zu berechnenden Brillenglases bzw. Brillenglasdesigns ist. Nachfolgend kann der Verlauf der Basis-Sollisoastigmatismuslinie wie oben beschrieben geändert werden und mittels Interpolation eine abgeänderte, an den neuen Verlauf der Basis-Sollisoastigmatismuslinie angepasste Sollastigmatismusverteilung ermittelt werden.

Eine Transformation einer vorgegebenen Sollastigmatismusverteilung mit einer Basisaddition $Add_B$ mittels einer Multiplikation mit einem Skalierungsfaktor s ist in der Patentanmeldung DE 10 2008 105 189.0 beschrieben.

Das erfindungsgemäße Verfahren eignet sich sowohl für das Erzeugen von Designs bzw. Designvarianten für konventionelle oder wirkungsoptimierte progressive Brillengläser, als auch für das Erzeugen von Designs bzw. Designvarianten für individuell optimierte progressive Brillengläser.

Mit dem erfindungsgemäßen Verfahren zum Erzeugen bzw. Berechnen eines Designs für ein progressives Brillenglas können schon mit wenigen Parametern aus einem ausgewogenen Startdesign (z.B. einem Universaldesign, einem Nahdesign, etc.) beliebig viele Designs abgeleitet werden, wobei die Übergänge stufenlos sind. In einer bevorzugten Ausführungsform behalten alle aus dem Startdesign abgeleiteten Designs vorzugsweise die gleiche charakteristische Eigenschaft des Brechwertverlaufes entlang der Hauptlinie und damit zusätzlich auch die minimale Breite im Progressionskanal. Es ist folglich im Nachhinein möglich, nahezu alle denkbaren Kombinationen von Sehfeldgrößen und Gradientenverläufe zu erzeugen, ohne daß jeweils ein neues Design über den kompletten Wirkungsbereich erarbeitet werden muß. Da beim erfindungsgemäßen Vorgehen nicht die Grund- bzw. Startdesigns direkt abgeändert werden müssen, sondern erst kurz vor der Optimierung die Koeffizienten zur Erzeugung der Sollvorgaben anhand der zusätzlichen Parameter angepaßt werden, können damit rasch geeignete Anwendungsdesigns abgeleitet werden. Insbesondere eignet sich das erfindungsgemäße Verfahren besonders für einen per Datenbank gesteuerten Berechnungsablauf. Da mit dem erfindungsgemäßen Verfahren unterschiedliche Designvarianten schnell und effizient erzeugt und gegeneinander getestet werden können, kann der Aufwand für die Entwicklung und Herstellung von konventionellen, wirkungsoptimierten oder individuellen progressiven Brillengläsern erheblich reduziert werden.

Zusätzlich kann eine Anpassung an die frei festlegbaren Positionen der Nah- und/oder Fernbezugspunkte des Brillenträgers und somit an unterschiedliche Progressionslängen durchgeführt werden. Insbesondere können die bestehenden Optimierungsvorgaben bzw. das bestehende Startdesign beliebig gestreckt und gestaucht und somit an die individuelle Gebrauchssituation und insbesondere an eine individuell ermittelte Progressionslänge angepaßt werden. Dabei ist keine Interpolation der Sollvorgaben von verschiedenen Designs (z.B. verschiedenen Startdesigns, welche unterschiedliche Progressionslänge aufweisen) notwendig. Somit können aus einem vorhandenen Startdesign zusätzlich Varianten mit unterschiedlicher (längerer oder kürzerer) Progressionszone bzw. Progressionslänge schnell und effizient erzeugt werden.

Ebenfalls ist es möglich, eine zusätzliche automatische Anpassung der Objektabstandsfunktion und somit eine automatische Anpassung des Sollbrechwertverlaufs vorzunehmen.

Das berechnete Brillenglasdesign kann ein Brillenglasdesign für ein progressives Brillenglas mit einer objektseitigen oder vorzugsweise augenseitigen progressiven Fläche sein. Die gegenüberliegende Fläche kann vorzugsweise eine einfache sphärische oder rotationssymmetrisch asphärische Fläche sein. Ebenfalls ist es möglich nach dem oben beschriebenen Verfahren, ein Brillenglasdesign für ein doppelprogressives Brillenglas zu berechnen bzw. erzeugen.

Ferner wird erfindungsgemäß eine Vorrichtung zum Erzeugen bzw. Berechnen eines Designs für ein progressives Brillenglas bereitgestellt, umfassend Designberechnungsmittel, welche ausgelegt sind, ein bevorzugtes Verfahren zum Erzeugen bzw. Berechnen eines Designs für ein progressives Brillenglas durchzuführen.

Gemäß einem Aspekt umfaßt die Vorrichtung zum Erzeugen bzw. Berechnen eines Designs für ein progressives Brillenglas

- Startvorgabenerfassungsmittel, welche ausgelegt sind

  - eine Hauptlinie;
  - Vorgaben für Sollastigmatismuswerte $A(u = 0, y)$ entlang der Hauptlinie; und
  - Vorgäben für den Verlauf zumindest einer Basis-Sollisoastigmatismuslinie, wobei der Verlauf der Basis-Sollisoastigmatismuslinie durch eine eindimensionale Funktion der Form $u_G(y) = f(y)$ beschrieben wird,

zu erfassen;

Berechnungsmittel, welche ausgelegt sind, eine räumliche Verteilung der Sollastigmatismuswerte des zu berechnenden Designs zu berechnen, mittels einer Interpolation zwischen den Sollastigmatismuswerten $A(u = 0, y)$ auf der Hauptlinie und den Sollastigmatismuswerten $A(u_G(y),y)$ auf der Basis-Sollisoastigmatismuslinie zu berechnen.

Dabei bezeichnen:

$u$      den horizontalen Abstand von der Hauptlinie eines Punktes $(u, y)$ des Brillenglasdesigns;
$y$      die vertikale Koordinate des Punktes $(u, y)$ des Brillenglasdesigns;
$u_G(y)$      den horizontalen Abstand von der Hauptlinie eines Punktes $(u_G(y),y)$ auf der Basis-Sollisoastigmatismuslinie.

Gemäß einem weiteren Aspekt umfaßt die Vorrichtung zum Erzeugen bzw. Berechnen eines Designs für ein progressives Brillenglas Designtransformationsmittel, welche ausgelegt sind, eine Transformation eines vorgegebenen Startdesigns durchzuführen, wobei das Startdesign umfaßt:

- eine Vorgabe einer Hauptlinie;
- Vorgaben für Sollastigmatismuswerte $A(u = 0, y)$ entlang einer Hauptlinie; und
- Vorgaben für den Verlauf zumindest einer Basis-Sollisoastigmatismuslinie $u_G(y) = f(y),$

wobei die Designtransformationsmittel umfassen:

- Berechnungsmittel, welche ausgelegt sind, ein Abändern des Verlaufs der Basis-Sollisoastigmatismuslinie $u_G(y) \rightarrow u'_G(y)$ durchzuführen; und
- Berechnungsmittel, welche ausgelegt sind, ein Berechnen der Sollastigmatismuswerte $A(u, y)$ des zu berechnenden Designs mittels einer Interpolation zwischen den Sollastigmatismuswerten $A(u = 0, y)$ auf der Hauptlinie und den Sollastigmatismuswerten $A(u'_G(y), y)$ auf der abgeänderten Basis-Sollisoastigmatismuslinie durchzuführen,

und wobei

$u$      den horizontalen Abstand von der Hauptlinie eines Punktes $(u, y)$ des Brillenglasdesigns;
$y$      die vertikale Koordinate des Punktes $(u, y)$ des Brillenglasdesigns;
$u_G(y)$      den horizontalen Abstand von der Hauptlinie eines Punktes $(u_G(y),y)$ auf der Basis-Sollisoastigmatismuslinie;
$u'_G(y)$      den horizontalen Abstand von der Hauptlinie eines Punktes $(u_G(y), y)$ auf der abgeänderten Basis-Sollisoastigmatismuslinie

bezeichnen.

Ferner umfaßt die Vorrichtung zum Erzeugen bzw. Berechnen eines Designs für ein progressives Brillenglas vorzugsweise Erfassungsmittel, welche ausgelegt sind, individuelle Daten des Brillenträgers zu erfassen.

Die Basis-Sollisoastigmatismuslinie verläuft durch einen ersten vorgegebenen oder vorgebbaren *Steuerpunkt* $\overline{r}_1 = (u_1, y_1)$. Das Abändern des Verlaufs der Basis-Sollisoastigmatismuslinie umfaßt die Schritte:

- Verschieben des ersten Steuerpunkts $\overline{r}_1 \rightarrow \overline{r}_1 (u'_1, y'_1)$ entlang einer vorgegebenen bzw. vorgebbaren Kurve; und
- Berechnung der abgeänderten Basis-Sollisoastigmatismuslinie derart, daß diese durch den verschobenen ersten

Steuerpunkt $\overline{r}_1$ ($u'_1$, $y'_1$) verläuft.

Ferner umfaßt die Vorrichtung zum Erzeugen bzw. Berechnen eines Designs für ein progressives Brillenglas vorzugsweise Erfassungsmittel, welche ausgelegt sind, individuelle Daten des Brillenträgers zu erfassen.

Das Startdesign oder die Startvorgaben (umfassend die Vorgaben für die Hauptlinie, für die Sollastigmatismuswerte entlang der Hauptlinie, für den Verlauf zumindest einer Basis-Sollisoastigmatismuslinie und gegebenenfalls andere Parameter) können in einem Speicher dauerhaft oder temporär gespeichert werden. Die Designberechnungs- und/oder Designtransformationsmittel, welche insbesondere Berechnungsmittel zum Abändern des Verlaufs der Basis-Sollisoastigmatismuslinie, und/oder die Berechnungsmittel zum Erzeugen bzw. Berechnen einer Sollastigmatismusverteilung und/oder deren räumlichen Verteilung umfassen können, können mittels entsprechend konfigurierten bzw. programmierten herkömmlichen Computern, spezialisierter Hardware und//oder Computernetze bzw. Computersysteme implementiert werden. Die Designberechnungs- und/oder Designtransformationsmittel und insbesondere die Berechnungsmittel zum Abändern des Verlaufs der Basis-Sollisoastigmatismuslinie und/oder die Berechnungsmittel zum Erzeugen bzw. Berechnen einer Sollastigmatismusverteilung und/oder deren räumlichen Verteilung können mittels geeigneter Schnittstellen in einer Signalverbindung mit dem Speicher stehen und insbesondere die in dem Speicher gespeicherten Daten auslesen und/oder modifizieren. Die Steuerpunktsänderungsmittel können ferner eine interaktive grafische Benutzerschnittstelle (GUI) umfassen, welche es einem Benutzer ermöglicht, die Positionen der Steuerpunkte zu verändern.

Erfindungsgemäß werden ferner ein Computerprogrammerzeugnis, d.h. ein in der Patentanspruchskategorie einer Vorrichtung beanspruchtes Computerprogramm, sowie ein Speichermedium mit darauf gespeichertem Computerprogramm bereitgestellt, wobei das Computerprogramm ausgelegt ist, wenn geladen und ausgeführt auf einem Computer, ein bevorzugtes erfindungsgemäßes Verfahren zum Erzeugen bzw. Berechnen eines Designs für ein progressives Brillenglas wie oben beschrieben durchzuführen.

Gemäß der Erfindung wird ferner ein Verfahren zum Herstellen eines progressiven Brillenglases vorgeschlagen, wobei das Verfahren umfaßt:

- Berechnen eines Designs für das Brillenglas nach einem bevorzugten erfindungsgemäßen Verfahren zum Erzeugen bzw. Berechnen eines Designs; und
- Berechnen bzw. Optimieren des Brillenglases nach dem berechneten Brillenglasdesign.

Ferner umfaßt das Herstellungsverfahren:

- Bereitstellen von Flächendaten des berechneten bzw. optimierten Brillenglases; und
- Fertigen des Brillenglases gemäß den bereitgestellten Flächendaten des Brillenglases.

Die Fertigung bzw. Bearbeitung kann mittels numerisch gesteuerten CNC-Maschinen, mittels eines Gießverfahrens, einer Kombination der beiden Verfahren oder nach einem anderen geeigneten Verfahren erfolgen.

Vorzugsweise erfolgt die Berechnung bzw. Optimierung des Brillenglases ferner unter Berücksichtigung von individuellen Daten des Brillenträgers.

Ferner wird erfindungsgemäß eine Vorrichtung zum Herstellen eines progressiven Brillenglases bereitgestellt, umfassend:

- Designberechnungsmittel, welche ausgelegt sind, ein Design für das Brillenglas nach einem bevorzugten erfindungsgemäßen Verfahren zum Erzeugen bzw. Berechnen eines Designs zu berechnen; und
- Optimierungs- bzw. Berechnungsmittel, welche ausgelegt sind, ein Berechnen bzw. Optimieren des Brillenglases nach dem berechneten Design durchzuführen.

Gemäß einem Aspekt umfassen die Designberechnungsmittel:

- Startvorgabenerfassungsmittel, welche ausgelegt sind

  - eine Hauptlinie;
  - Vorgaben für Sollastigmatismuswerte $A$($u$ = 0, $y$) entlang der Hauptlinie; und
  - Vorgaben für den Verlauf zumindest einer Basis-Sollisoastigmatismuslinie, wobei der Verlauf der Basis-Sollisoastigmatismuslinie durch eine eindimensionale Funktion der Form $u_G(y) = f(y)$ beschrieben wird,

  zu erfassen;

- Berechnungsmittel, welche ausgelegt sind, eine räumliche Verteilung der Sollastigmatismuswerte des zu berechnenden Designs zu berechnen, mittels einer Interpolation zwischen den Sollastigmatismuswerten $A(u = 0, y)$ auf der Hauptlinie und den Sollastigmatismuswerten $A(u_G(y), y)$ auf der Basis-Sollisoastigmatismuslinie zu berechnen.

Gemäß einem weiteren Aspekt umfassen die Designberechnungsmittel

- Berechnungsmittel, welche ausgelegt sind, ein Abändern des Verlaufs der Basis-Sollisoastigmatismuslinie $u_G(y) \rightarrow '_G(y)$ durchzuführen; und
- Berechnungsmittel, welche ausgelegt sind, ein Berechnen der Sollastigmatismuswerte $A(u, y)$ des zu berechnenden Designs mittels einer Interpolation zwischen den Sollastigmatismuswerten $A(u = 0, y)$ auf der Hauptlinie und den Sollastigmatismuswerten $A(u'_G(y), y)$ auf der abgeänderten Basis-Sollisoastigmatismuslinie durchzuführen.

Die Optimierungs- bzw. Berechnungsmittel sowie die Designberechungs- und/oder Designtransformationsmittel können mittels geeignet konfigurierten bzw. programmierten Computern, spezialisierte Hardware und/oder Computernetze bzw. Computersysteme und so weiter implementiert werden. Es ist möglich, daß der gleiche Computer bzw. das gleiche Computersystem derart konfiguriert bzw. programmiert ist, sowohl die Berechnung des Designs für das Brillenglas als auch die Berechnung bzw. Optimierung des Brillenglases nach dem berechneten Design durchzuführen. Es ist jedoch selbstverständlich möglich, daß die Berechnung des Designs und die Berechnung des Brillenglases nach dem berechneten Design in separaten Recheneinheiten, beispielsweise in separaten Computern oder Computersystemen erfolgen.

Ferner umfaßt die Vorrichtung zum Herstellen eines progressiven Brillenglases vorzugsweise Bearbeitungsmittel zum fertig Bearbeiten des Brillenglases. Die Bearbeitungsmittel können z.B. CNC gesteuerte Maschinen zur Direktbearbeitung eines Blanks nach den ermittelten Optimierungsvorgaben umfassen. Vorzugsweise weist das fertig bearbeitete Brillenglas eine einfache sphärische öder rotationssymmetrisch asphärische Fläche und eine nach den erfindungsgemäß berechneten Designvorgaben sowie individuellen Parametern des Brillenträgers optimierte progressive Fläche auf. Vorzugsweise ist die sphärische oder rotationssymmetrisch asphärische Fläche die Vorderfläche (d.h. die objektseitige Fläche) des Brillenglases. Selbstverständlich ist es jedoch möglich, die nach dem berechneten Design optimierte Fläche als Vorderfläche des Brillenglases anzuordnen. Ebenfalls ist es möglich, daß beide Flächen des Brillenglases progressive Flächen sind.

Vorzugsweise umfaßt die Vorrichtung zum Herstellen eines progressiven Brillenglases ferner Erfassungsmittel zum Erfassen von individuellen Daten des Brillenträgers, welche insbesondere Daten bezüglich der individuell für den Brillenträger erforderlichen dioptrischen Wirkung des Brillenglases umfassen.

Erfindungsgemäß werden ferner ein Computerprogrammerzeugnis (d.h. ein in der Patentanspruchskategorie einer Vorrichtung beanspruchtes Computerprogramm) und ein Speichermedium mit darauf gespeichertem Computerprogramm bereitgestellt, wobei das Computerprogramm ausgelegt ist, wenn geladen und ausgeführt auf einem Computer, ein Verfahren zum Berechnen und Optimieren eines progressiven Brillenglases durchzuführen, wobei das Verfahren folgende Schritte umfaßt:

- Berechnen eines Brillenglasdesigns nach einem bevorzugten erfindungsgemäßen Verfahren zum Erzeugen bzw. Berechnen eines Designs für ein progressives Brillenglas;
- Berechnen bzw. Optimieren des Brillenglases nach dem berechneten Brillenglasdesign.

Ein nach einem bevorzugten Herstellungsverfahren hergestellten Brillenglases kann in einer vorgegebenen durchschnittlichen oder individuellen Gebrauchsstellung des Brillenglases vor den Augen eines bestimmten Brillenträgers zur Korrektur einer Fehlsichtigkeit des Brillenträgers verwendet werden.

Die Erfindung wird nachfolgend beispielhaft mit Bezug auf die Figuren beschrieben. Es zeigen:

Fig. 1    Konstruktionslinien und Steuerpunkte eines ersten Startdesigns;
Fig. 2    Sollastigmatismusverteilung des ersten Startdesigns;
Fig. 3    Konstruktionslinien und Steuerpunkte eines zweiten Startdesigns;
Fig. 4    Sollastigmatismusverteilung des zweiten Startdesigns;
Fig. 5    Konstruktionslinien und Steuerpunkte eines aus dem ersten Startdesign abgeleiteten Gleitsichtglasdesigns;
Fig. 6    Sollastigmatismusverteilung des in Fig. 5 dargestellten Gleitsichtglasdesigns;
Fig. 7    Konstruktionslinien und Steuerpunkten eines aus dem zweiten Startdesign abgeleiteten Gleitsichtglasdesigns;
Fig. 8    Sollastigmatismusverteilung des in Fig. 7 dargestellten Gleitsichtglasdesigns;
Fig. 9    Schematische Darstellung eines beispielhaften Verfahrensablaufs;
Fig. 10   Schematische Darstellung der Berechnung der Sollastigmatismuswerte in der Peripherie eines Brillenglases.

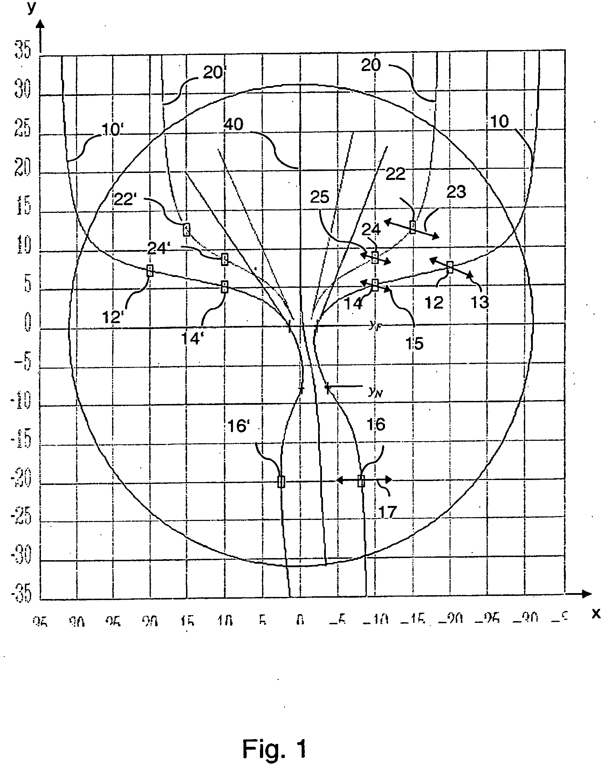

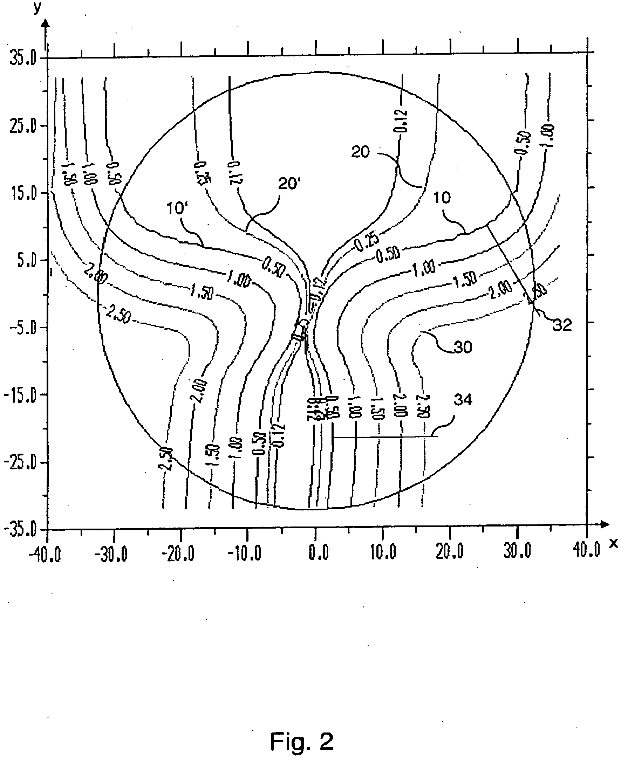

Das Koordinatensystem der Figuren 1, 3, 5 und 7 bezieht sich auf ein kartesisches Koordinatensystem $\{x, y\}$ der augenseitigen progressiven Fläche, wie oben definiert. Der Koordinatenmittelpunkt fällt mit dem geometrischen Mittelpunkt des Brillenglases zusammen. Die entsprechenden Sollastigmatismusverteilungen (Figuren 2, 4, 6 und 8) sind in dem gleichen Koordinatensystem dargestellt, wobei lediglich die x-Achse spiegelverkehrt zu der x-Achse in Figuren 1, 3, 5 und 7 ist. In Fig. 1 bis 8 ist jeweils auf der horizontalen (x-Achse) und der vertikalen Achse der jeweilige Abstand vom Koordinatenursprung in mm aufgetragen.

**Fig. 1** zeigt die Konstruktionslinien - Hauptlinie, Basis-Sollisoastigmatismuslinie und zusätzliche Sollastigmatismuslinie - eines ersten "weichen" Startdesigns. **Fig. 2** zeigt die entsprechende Sollastigmatismusverteilung des ersten "weichen" Startdesigns.

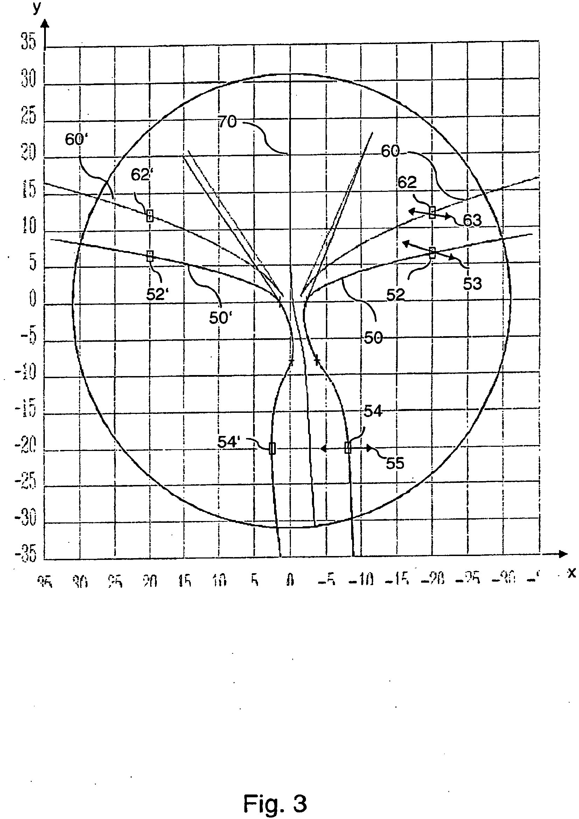

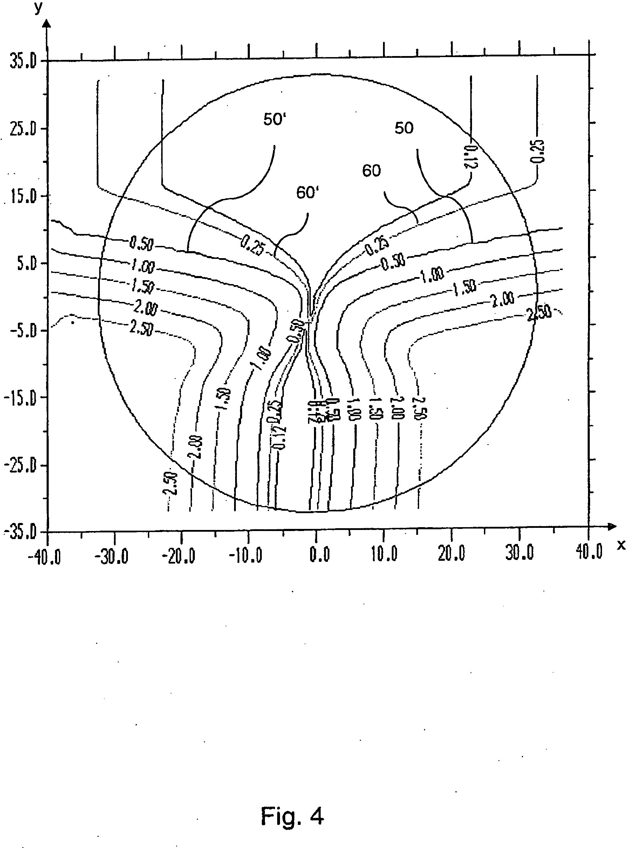

**Fig. 3** zeigt die Konstruktionsgrenzlinien - Hauptlinie, Basis-Sollisoastigmatismuslinie und zusätzliche Sollisoastigmatismuslinie - eines zweiten, "harten" Startdesigns. **Fig. 4** zeigt die entsprechende Sollastigmatismusverteilung des zweiten harten" Startdesigns.. Sowohl in Fig. 2 als auch in Fig. 4 ist die Astigmatismusverteilung des entsprechenden Designs mittels Sollisoastigmatismuslinien dargestellt.

Die in Fig. 1 und 3 gezeigten Startdesigns weisen jeweils eine Hauptlinie (Bezugszeichen 40 in Fig. 1 und Bezugszeichen 70 in Fig. 3), eine nasale (Bezugszeichen 10 in Fig. 1 und Bezugszeichen 50 in Fig. 3) und eine temporale (Bezugszeichen 10' in Fig. 1 und Bezugszeichen 50' in Fig. 3) 0,5 dpt- Basis-Sollisoastigmatismuslinie auf. Ferner weisen die Startdesigns im Fernteil bzw. - bereich jeweils eine nasale (Bezugszeichen 20 in Fig. 1 und Bezugszeichen 60 on Fig. 3) und eine temporale(Bezugszeichen 20' in Fig. 1 und Bezugszeichen 60' in Fig. 3) zusätzliche 0,25 dpt- Sollisoastigmatismuslinie auf.

Im Fernteil des in Fig. 1 gezeigten ersten "weichen" Startdesign ist der Verlauf der Basis-Sollisoastigmatismuslinie (sowohl temporal als auch nasal) durch die Funktion $u_G(y) = a + b(\operatorname{atan}(\frac{y-c}{d}) + \frac{\pi}{2})$ mit den Parametern $a, b, c, d$ vorgegeben.

Im Fernteil des in Fig. 3 gezeigten zweiten "harten" Startdesigns ist der Verlauf der Basis-Sollisoastigmatismuslinie (sowohl temporal als auch nasal) durch die Funktion $u_G(y) = a_f + b_f y + c_f y^n$ mit den Parametern $a_f, b_f, c_f$ vorgegeben.

Im Nahteil sowohl des in Fig. 1 als auch des in Fig. 3 dargestellten Startdesigns ist der Verlauf der Basis-Sollisoastigmatismuslinie (sowohl temporal als auch nasal) durch die Funktion $u_G(y) = a_n + \frac{b_n}{y} + \frac{c_n}{y^2} + \frac{d_n}{y^3}$ mit den Parametern $a_n, b_n, C_n, d_n$, vorgegeben.

Im Fernteil des in Fig. 1 dargestellten ersten "weichen" Startdesigns verläuft die nasale 0,5dpt-Basis-Sollisoastigmatismuslinie 10 durch einen ersten 12 und einen zweiten 14 Steuerpunkt. Der erste Steuerpunkt 12 kann entlang der als Pfeil dargestellten Geraden 13 und der zweite Steuerpunkt 14 entlang der als Pfeil dargestellten Geraden 15 bewegt werden. Ebenfalls verläuft die nasale zusätzliche Sollisoastigmatismuslinie im Fernteil durch einen ersten 22 und einen zweiten 24 Steuerpunkt. Der erste Steuerpunkt kann entlang der als Pfeil dargestellten Gerade 23 und der zweite Steuerpunkt entlang der als Pfeil dargestellten Gerade 25 bewegt werden. Im Nahteil verläuft die nasale Basis-Sollisoastigmatismuslinie durch einen dritten Steuerpunkt 16, welcher entlang der als Pfeil dargestellten Geraden 17 bewegt werden kann.

Die Konstruktion der temporalen Basis-Sollisoastigmatismuslinie 10' ist gleich der Konstruktion der nasalen Basis-Sollisoastigmatismuslinie. Die temporale Basis-Sollisoastigmatismuslinie verläuft dementsprechend ebenfalls durch einen ersten 12', einen zweiten 14' und einen dritten 16' Steuerpunkt. Ebenfalls ist die Konstruktion der zusätzlichen temporalen Sollisoastigmatismuslinie 20' gleich der Konstruktion der nasalen zusätzlichen Sollisoastigmatismuslinie 20. Die temporale zusätzliche Sollisoastigmatismuslinie verläuft dementsprechend durch einen ersten 22' und einen zweiten 24' Steuerpunkt.

Im Fernteil verläuft die nasale Basis-Sollisoastigmatismuslinie 50 des in Fig. 3 gezeigten Startdesigns durch einen ersten Steuerpunkt 52, welcher entlang der als Pfeil dargestellten Geraden 53 bewegt werden kann. Im Nahteil verläuft die nasale Basis-Sollisoastigmatismuslinie 50 durch einen zweiten Steuerpunkt 54, welcher entlang der als Pfeil dargestellten Geraden 55 bewegt werden kann. Die temporale Basis-Sollisoastigmatismuslinie 50' weist den gleichen Aufbau auf, wie die nasale Basis-Sollisoastigmatismuslinie 50. Die Bezugszeichen 52' und 54' bezeichnen die entsprechenden Steuerpunkte, durch welche die temporale Basis-Sollisoastigmatismuslinie 50' verläuft. Ebenfalls weist die nasale zusätzliche Sollisoastigmatismuslinie 60 im Fernteil einen ersten Steuerpunkt 62 auf, welcher entlang der als Pfeil dargestellten Geraden 63 bewegt werden kann. Die temporale zusätzliche Sollisoastigmatismuslinie 60' weist einen entsprechenden Steuerpunkt 62' auf.

Durch eine zusätzliche Vorgabe der äußeren bzw. maximalen 2,5 dpt-Sollisoastigmatismuslinie 30 mit dem Wert des Sollastigmatismus $A_{max}$ (in dem vorliegenden Fall $A_{max} = 2,5$ dpt), des Abstands der maximalen 2,5 dpt-Sollisoastigmatismuslinie 30 von der Basis-Sollisoastigmatismuslinie entlang einer ersten vorgegebenen Gerade 32 im Fernteil und des Abstands der maximalen 2,5 dpt- Sollisoastigmatismuslinie 30 von der Basis-Sollisoastigmatismuslinie entlang einer zweiten vorgegebenen Gerade 34 im Nahteil ist die Verteilung des Sollastigmatismus bestimmt.

Sowohl das erste "weiche" als auch das zweite "harte" Startdesign werden transformiert, wobei zwischen einer vertikalen Koordinate $y_F$ und einer vertikalen Koordinate $y_N$ (d.h. im Progressionsbereich) keine Änderung der Basis-Sollisoastigmatismuslinien 10 und 10' des ersten Startdesigns bzw. der Basis-Sollisoastigmatismuslinien 50 und 50' des zweiten Startdesigns erfolgt.

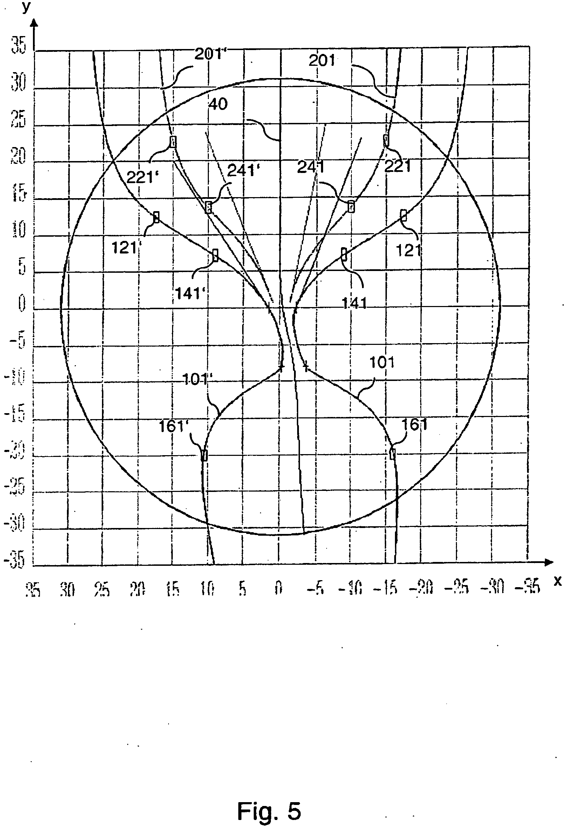

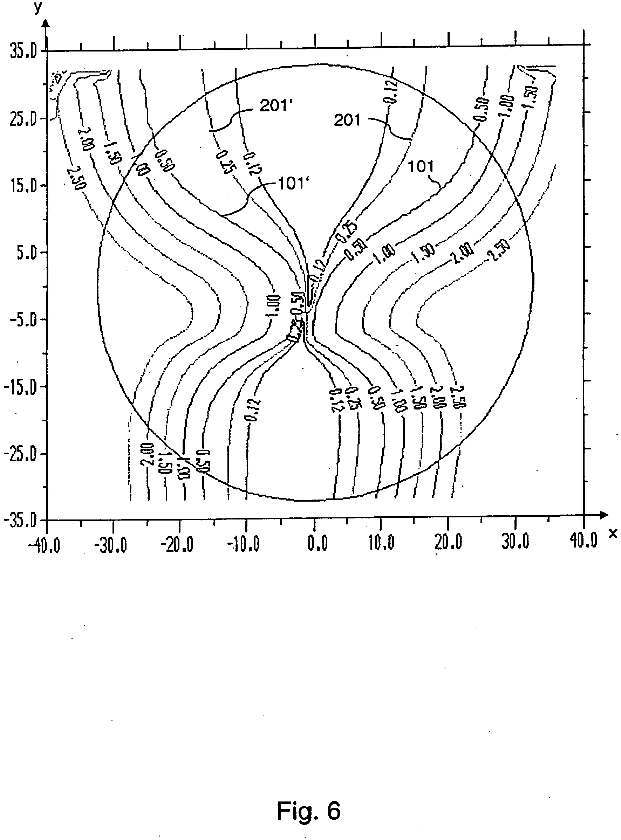

**Fig. 5 und 6** zeigen ein Beispiel für ein aus dem in Fig. 1 dargestellten Startdesign abgeleitetes bzw. transformiertes Gleitsichtglasdesign. Fig. 5 zeigt die abgeänderten Konstruktionslinien (die abgeänderten temporalen und nasalen Basis-Sollisoastigmatismuslinien 101, 101' und die abgeänderten zusätzlichen temporalen und nasalen Sollisoastigmatismuslinien 201, 201') sowie die Positionen der entsprechend verschobenen Steuerpunkte der Basis-Sollisoastigmatismuslinien und der zusätzlichen Sollisoastigmatismuslinien. In Fig. 5 und 6 bezeichnen

- die Bezugszeichen 121, 121' die verschobenen Steuerpunkte 12, 12;
- die Bezugszeichen 141, 141' die verschobenen Steuerpunkte 14, 14';
- die Bezugszeichen 161, 161' die verschobenen Steuerpunkte 16 und 16';
- die Bezugszeichen 221, 221' die verschobenen Steuerpunkte 22 und 22';
- die Bezugszeichen 241, 241' den verschobenen Steuerpunkt 24, 24'.

Fig. 6 zeigt die Sollastigmatismusverteilung des aus dem ersten Design abgeleiteten Designs. Das abgeleitete Gleitsichtglasdesign weist einen breiten Nahteil, jedoch Einbußen im seitlichen Fernteil, auf.

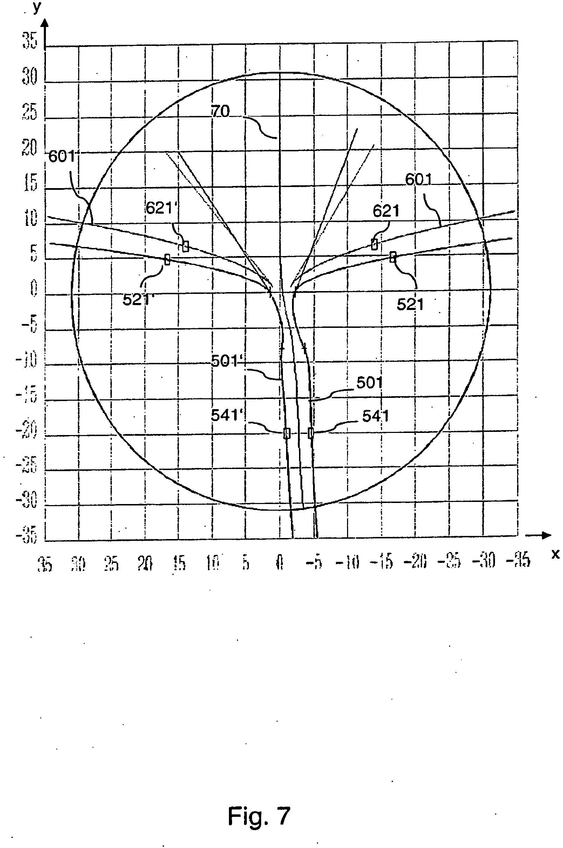

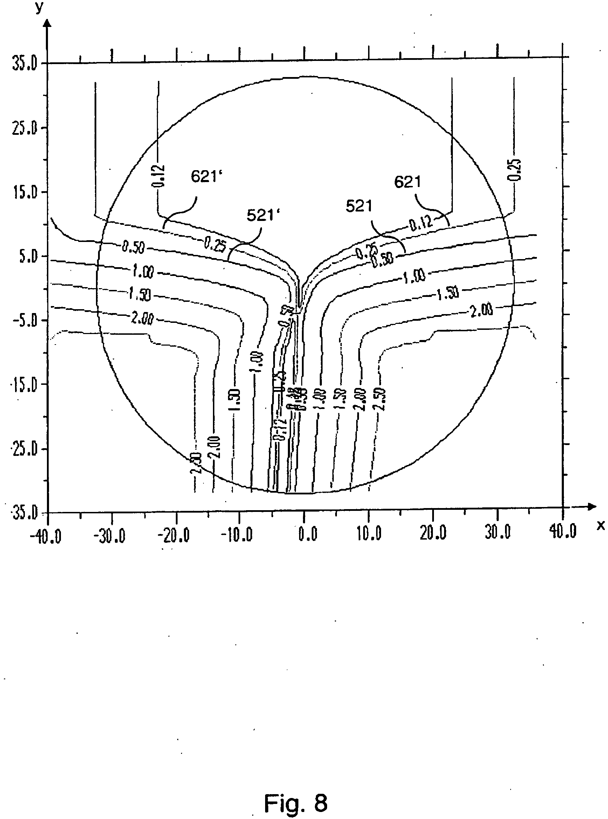

**Fig. 7 und 8** zeigen ein Beispiel für ein aus dem in Fig. 3 dargestellten Startdesign abgeleitetes bzw. transformiertes Gleitsichtglasdesign. Fig. 7 zeigt die abgeänderten Konstruktionslinien (abgeänderte temporale 501 und nasale 501' Basis-Sollisoastigmatismuslinie, abgeänderte temporale 601 und nasale 601' zusätzliche Sollisoastigmatismuslinie) sowie die Positionen der entsprechend verschobenen Steuerpunkte. In Fig. 7 und 8 bezeichnen

- die Bezugszeichen 521, 521' die verschobenen Steuerpunkte 52 und 52';
- die Bezugszeichen 541, 541' die verschobenen Steuerpunkte 54 und 54';
- die Bezugszeichen 621, 621' den verschobenen Steuerpunkt 62, 62'.

Fig. 8 zeigt die Sollastigmatismusverteilung des aus dem zweiten Startdesign abgeleiteten Gleitsichtglasdesigns. Das abgeleitete Gleitsichtsglasdesign weist eine minimale Nahteilbreite und einen großen fehlerfreien Fernteil auf.

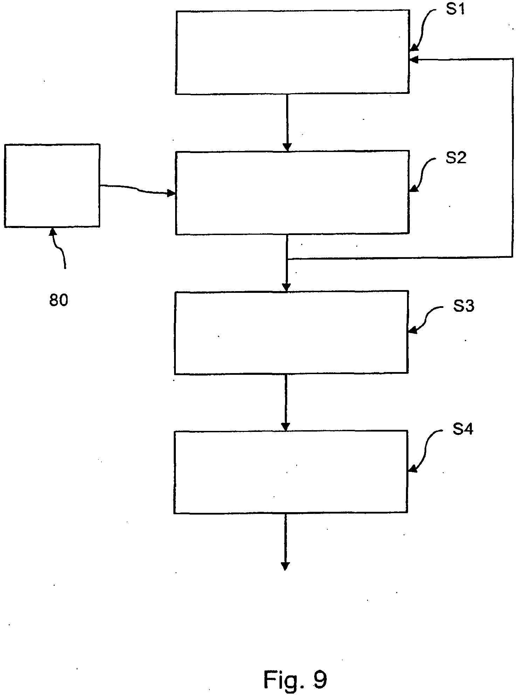

**Fig. 9** zeigt schematisch einen beispielhaften Verfahrensablauf bei der Herstellung eines (individuell optimierten) progressiven Brillenglases nach einem ermittelten Gleitsichtglasdesign, welches gemäß einem bevorzugten Verfahren berechnet wird.

In einem ersten Schritt (S1) werden individuelle Daten des Brillenträgers erfaßt. Die Erfassung der individuellen Daten des Brillenträgers erfolgt mittels geeigneter grafischer Benutzerschnittstellen (GUI), welche die Eingabe und gegebenenfalls die Änderung der eingegebenen individuellen Daten des Brillenträgers ermöglichen.

Die individuellen Daten des Brillenträgers umfassen insbesondere individuelle Refraktionsdaten (Sphäre, Zylinder, Achslage, Addition, Prisma und Basis), individuelle Fassungs- und Zentrierdaten (Scheibenhöhe und Zentrierhöhe, Fassungsform) und Individuallisierungsparameter bzw. individuelle Parameter der Augen des Brillenträgers und/oder der individuellen Gebrauchssituation bzw. Gebrauchsstellung der Brille vor den Augen des Brillenträgers (insbesondere Pupillendistanz, Hornhautscheitelabstand, Vorneigung, Fassungsscheibenwinkel, etc.).

Die Fassungs- und Zentrierdaten können von dem Anwender (z.B. einem Augenoptiker) angegeben werden. Alternativ können die Fassungsdaten aus einer Datenbank abgerufen werden. Die individuellen Parameter (insbesondere Pupillendistanz, Hornhautscheitelabstand, Vorneigung, Fassungsscheibenwinkel) können beispielsweise automatisch mittels einer geeigneten 3-D Meßvorrichtung, wie z.B. ImpressionIST der Firma Rodenstock GmbH, ermittelt werden. Alternativ können die individuellen Parameter mit herkömmlichen Meßtools ermittelt werden.

Die individuellen Daten des Brillenträgers umfassen ferner vorzugsweise Daten bezüglich des Vorgängerglases, insbesondere

- Daten bezüglich des Typs Brillenglas (Einstärken, Bifokal, Progressiv), und/oder der Progressionslänge;
- Daten bezüglich der dioptrischen Wirkung, insbesondere der Addition des Vorgängerglases.

Die Daten bezüglich des Typs des Brillenglases (Einstärken, Bifokal, Progressiv) und der Progressionslänge des Vorgängerglases können bei der Optimierung der räumlichen Position des Fern- und Nahbezugspunkte, der optischen Wirkung, des Verlaufs der Basis-Sollisoastigmatismuslinie (bzw. Position und Lage der Sehbereiche) etc. berücksichtigt werden. Ferner können die Daten bezüglich des Vorgängerglases Daten bezüglich Verbesserungswünschen gegenüber der bisherigen Brille, beispielsweise größerer Fernbereich, größerer Zwischenbereich, größerer Nahbereich, geringere Blicksenkung beim Lesen oder geringere Schaukelbewegung, umfassen.

Ferner können die individuellen Daten des Brillenträgers Daten bezüglich der Hauptnutzung bzw. Daten bezüglich der Anwendungsschwerpunkte (Autofahren, Computerarbeitsplatz, Lesen, Handwerken, etc.) des Gleitsichtglases umfassen.

Die individuellen Daten des Brillenträgers können ebenfalls Daten bezüglich der Präferenzen hinsichtlich der Sehbereiche (Fern-, Nah- und Zwischen- bzw. Progressionsbereich) umfassen. Die Abfrage dieser Daten kann beispielsweise mittels geeigneter graphischer Benutzerschnittstellen erfolgen. Diese Daten gehen vorzugsweise ebenfalls in die Berechnung der individuellen optimalen Größe der Sehbereiche bzw. des individuellen optimalen Verlauf der Basis-Sollisoastigmatismuslinie sowie gegebenenfalls in die Berechnung der optimalen Lage des Fern- und/oder Nahbezugspunkts ein. Anhand der erfaßten individuellen Präferenzen können den einzelnen Sehbereichen entsprechende Gewichtungen (PräferenzFerne, PräferenzNähe, PräferenzZwischenbereich) zugeordnet werden. In gleicher Weise kann aus den Daten bezüglich des bisher getragenen Brillenglases und Daten bezüglich der Verbesserungswünsche durch geeignete Vergabe von Gewichtungen eine ideale Lage der Bezugspunkte (Fern- und Nahbezugspunkt) in Bezug auf die Verbesserungswünsche bestimmt werden.

Ebenfalls können Daten bezüglich des Materials (Kunststoff/Silikat) und/oder des Brechungsindexes des Vorgängerglases erfaßt und ausgewertet werden. Falls bereits ein Gleitsichtglas getragen worden ist, können ferner die Daten bezüglich des Vorgängerglases, Daten bezüglich des Designs des Brillenglases (Hart/Weich) und/oder des Typs Gleitsichtglas (Individuell, Konventionell) umfassen.

Ferner können die individuellen Daten des Brillenträgers Daten bezüglich der

- Umwelteinflüsse (Umgebungshelligkeit etc.); und/oder
- individuellen Hauptblickrichtung Ferne und Nähe; und/oder
- eventuell vorhandene außergewöhnliche Kopf- und Körperhaltung;
- Physiologische Parameter der Augen des Brillenträgers, insbesondere Sehschärfe mit Korrektion, Stereogrenzwinkel.

Entsprechend können geeignete graphische Benutzerschnittstellen zur Eingabe und gegebenenfalls Korrektion dieser Daten vorgesehen werden.

Ferner umfassen die individuellen Daten vorzugsweise Daten bezüglich der individuellen Objektabstände: Arbeitsabstand beim Lesen (Naharbeit), Arbeitsabstand in der Ferne und/oder Daten bezüglich der Objektabstände bei der Refraktionsbestimmung: Ferne und Nähe. Die Angaben zu den Objektentfernungen Ferne und Nähe werden vorzugsweise bei der Berechnung und Optimierung des individuellen Designs für das progressive Brillenglas sowie bei der Optimierung des individuellen Brillenglases berücksichtigt. Somit kann der Strahlengang, welcher der tatsächlichen Gebrauchssituation entspricht, genauer simuliert werden und folglich die Abbildungsqualität verbessert werden.

Die individuellen Daten des Brillenträgers werden erfaßt und ausgewertet und steuern die Bestimmung des optimalen Verlaufs der Basis-Sollisoastigmatismuslinie bzw. der optimalen Größe der Sehbereiche und vorzugsweise der optimalen räumlichen Lage der Bezugspunkte Ferne und Nähe.

In einem zweiten Schritt (S2) wird ein für einen bestimmten Brillenträger in einer bestimmten Gebrauchssituation optimaler Verlauf der Basis-Sollisoastigmatismuslinie und somit die optimale Größe und/oder Lage der Sehbereiche (Fern-, Nah- und Progressionsbereich) sowie gegebenenfalls eine optimale räumliche Lage des Fern- und/oder Nahbezugspunkts anhand der erfaßten individuellen Daten berechnet bzw. festgelegt. Dies kann manuell oder vorzugsweise automatisch anhand der erfaßten individuellen Daten erfolgen.

Insbesondere kann der Augenoptiker anhand der erfaßten individuellen Daten einen "idealen", Verlauf der Basis-Sollisoastigmatismuslinie (und somit der Lage und Größe der Sehbereiche) sowie eine "ideale", individuelle Position des Fern- und/oder Nahbezugspunkts selbst für die Glasbestellung festlegen. Vorzugsweise werden jedoch der ideale Verlauf der Basis-Sollisoastigmatismuslinie sowie die ideale Position aus den erfaßten Präferenzen und gegebenenfalls Verbesserungswünschen automatisch mit Hilfe eines Computers berechnet.

In einem weiteren Schritt (S3) wird ein Gleitsichtglasdesign bzw. ein Vorschlag für ein Gleitsichtsglasdesign mit dem in dem zweiten Schritt S2 ermittelten optimalen Verlauf der Basis-Sollisoastigmatismuslinie und vorzugsweise mit der ermittelten optimalen Lage des Fern- und Nahbezugspunkt nach einem bevorzugten Verfahren mittels einer Transformation eines vorgegebenen Startdesigns 80 berechnet. Dieser Designvorschlag wird mittels geeigneter graphischer Benutzerschnittstellen visualisiert, wobei dem Benutzer die Möglichkeit gegeben wird, durch eine Veränderung des Verlaufs der Basis-Sollisoastigmatismuslinie (z.B. durch Verschiebung der Steuerpunkte) und gegebenenfalls der individuellen Position des Fern- und/oder des Nahbezugspunkts und/oder durch eine Veränderung der individuellen Kundendaten, insbesondere der Präferenzen, der Fassungsdaten, der Gewichtungen, etc., das Design aktiv zu verändern.

Die Änderung bzw. die Anpassung des Verlaufs der Basis-Sollisoastigmatismuslinie sowie gegebenenfalls der Position des Fern- und/oder Nahbezugspunkte und/oder der Präferenzen bezüglich der Sehbereiche kann beispielsweise mittels einer geeigneten graphischen Benutzerschnittstelle erfolgen.

Das neue Brillenglasdesign wird vorzugsweise in Echtzeit berechnet und visualisiert. Vorzugswiese wird ebenfalls die Differenz bzw. die Veränderung der optischen Eigenschaften des neuen gegenüber dem alten Brillenglasdesign visualisiert.

Zusätzlich können die entsprechenden geometrischen Daten eines nach dem berechneten (individuellen) Design bzw. Designvorschlag berechneten Brillenglases (Mittendicke, Randdicke, Basiskurve, Gewicht) berechnet und ebenfalls mittels einer geeigneten graphischen Benutzerschnittstelle (vorzugsweise in Form eines dreidimensionalen Models) visualisiert werden. Insbesondere können kosmetische Eigenschaften bzw. Daten bezüglich der Ästhetik des Brillenglases (z.B. Gewicht, geometrische Daten wie Bauhöhe, maximale Randdicke, Mittendicke, etc.) visualisiert werden. Die Visualisierung der kosmetischen Eigenschaften des Brillenglases kann beispielsweise mittels einer dreidimensionalen Darstellung eines Models des Brillenglases mit den ermittelten geometrischen Daten erfolgen. Die Darstellung der kosmetischen Eigenschaften des Brillenglases kann z.B. durch eine Auswahl der Basiskurve und des Brechungsindexes beeinflußt werden. Die Auswahl kann wirkungsabhängig sein.

Neben der Visualisierung der kosmetischen Eigenschaften des Brillenglases kann ferner eine Visualisierung der optischen Eigenschaften des Brillenglases (Sehbereiche, insbesondere räumliche Lage und Größe der einzelnen Sehbereiche, Verlauf der Basis-Sollisoastigmatismuslinie, etc. erfolgen). Die Darstellung der Sehbereichsgrößen kann lediglich relativ zu den Verordnungsdaten erfolgen, ohne daß eine eventuelle Materialabhängigkeit berücksichtigt wird. Selbstverständlich kann jedoch eine Berücksichtigung einer Materialabhängigkeit vorgesehen werden.

Ferner kann eine Visualisierung des Sehkomforts (z.B. Blicksenkung, Schaukeln, peripheres Sehen, Verzerrungen, etc.) vorgesehen werden.

Zusätzlich kann eine geeignete Darstellung von Performancewerten bezüglich der Sehbereiche, des Sehkomforts und/oder der kosmetischen Eigenschaften bzw. der Ästhetik des berechneten Brillenglases vorgesehen werden. Ebenfalls können alternative Designvorschläge und/oder Performancewerte alternativer Designvorschläge dargestellt werden.

Anschließend (Schritt S4) wird ein individuelles progressives Brillenglas nach dem endgültigen individuellen Design berechnet bzw. optimiert, wobei bei der Berechnung bzw. Optimierung des Brillenglases ebenfalls individuelle Daten bezüglich des Brillenträgers (wie z.B. individuelle Gebrauchssituation, Fassungsdaten, Daten bezüglich der Augen des Brillenträgers, etc.) berücksichtigt werden. Das fertig berechnete bzw. optimierte Brillenglas kann zum Beispiel mittels einer direkten Bearbeitung mit numerisch gesteuerten Maschinen, mittels eines Gießverfahrens oder mittels anderen geeigneten Verfahren z.B. aus Glas oder Kunststoff hergestellt werden (Schritt S5).

**Fig. 10** illustriert die Berechnung der Sollastigmatismuswerte in der Peripherie des Brillenglases nach dem Parallelkurvenmodell-Verfahren (in der Figur 10 bezeichnet als PK-Model) und nach dem Kegelstumpfmodell-Verfahren (in der Figur 10 bezeichnet als KS-Model).

**Bezugszeichenliste**

| | |
|---|---|
| 10, 10' | Basis-Sollisoastigmatismuslinie |
| 12, 12' | erster Steuerpunkt der Basis-Sollisoastigmatismuslinie 10, 10' |
| 13 | Gerade, entlang welcher sich der Steuerpunkt 12 bewegen kann |
| 14, 14' | zweiter Steuerpunkt der Basis-Sollisoastigmatismuslinie 10, 10' |
| 15 | Gerade, entlang welcher sich der Steuerpunkt 14 bewegen kann |
| 16,16' | dritter Steuerpunkt der Basis-Sollisoastigmatismuslinie 10, 10' |
| 17 | Gerade, entlang welcher sich der Steuerpunkt 16 bewegen kann |
| 20, 20' | zusätzliche Sollisoastigmatismuslinie |
| 22, 22' | erster Steuerpunkt der zusätzlichen Sollisoastigmatismuslinie 20, 20' |
| 23 | Gerade, entlang welcher sich der Steuerpunkt 22 bewegen kann |
| 24, 24' | zweiter Steuerpunkt der zusätzlichen Sollisoastigmatismuslinie 20, 20' |
| 25 | Gerade, entlang welcher sich der Steuerpunkt 24 bewegen kann |
| 30 | äußere, maximale Sollisoastigmatismuslinie |
| 32,34 | Geraden |
| 40 | Hauptlinie |
| 50, 50' | Basis-Sollisoastigmatismuslinie |
| 52, 52' | erster Steuerpunkt der Basis-Sollisoastigmatismuslinie 50, 50' |
| 53 | Gerade, entlang welcher sich der Steuerpunkt 52 bewegen kann |
| 54, 54' | erster Steuerpunkt der Basis-Sollisoastigmatismuslinie 50, 50' |

| 55 | Gerade, entlang welcher sich der Steuerpunkt 54 bewegen kann |
|---|---|
| 60 | zusätzliche Sollisoastigmatismuslinie |
| 62, 62' | erster Steuerpunkt der zusätzlichen Sollisoastigmatismuslinie 60, 60' |
| 63 | Gerade, entlang welcher sich der Steuerpunkt 62 bewegen kann |
| 70 | Hauptlinie |

| 101', 101' | abgeänderte Basis-Sollisoastigmatismuslinie |
|---|---|
| 121, 121' | erster Steuerpunkt der abgeänderten Basis-Sollisoastigmatismuslinie 101, 101' |
| 131 | Gerade, entlang welcher sich der Steuerpunkt 121 bewegen kann |
| 141, 141' | zweiter Steuerpunkt der abgeänderten Basis-Sollisoastigmatismuslinie 101, 101' |
| 151 | Gerade, entlang welcher sich der Steuerpunkt 141 bewegen kann |
| 161,161' | dritter Steuerpunkt der abgeänderten Basis-Sollisoastigmatismuslinie 10, 10' |
| 171 | Gerade, entlang welcher sich der Steuerpunkt 16 bewegen kann |
| 201, 201' | abgeänderte zusätzliche Sollisoastigmatismuslinie |
| 221, 221' | erster Steuerpunkt der abgeänderten zusätzlichen Sollisoastigmatismuslinie 201, 201' |
| 231 | Gerade, entlang welcher sich der Steuerpunkt 221 bewegen kann |
| 241, 241' | zweiter Steuerpunkt der abgeänderten zusätzlichen Sollisoastigmatismuslinie 201, 201' |
| 251 | Gerade, entlang welcher sich der Steuerpunkt 24 bewegen kann |

| 501, 501' | abgeänderte Basis-Sollisoastigmatismuslinie |
|---|---|
| 521, 521' | erster Steuerpunkt der abgeänderten Basis-Sollisoastigmatismuslinie 501, 501' |
| 541, 541' | zweiter Steuerpunkt der abgeänderten Basis-Sollisoastigmatismuslinie 501, 501' |
| 601, 601' | zusätzliche Sollisoastigmatismuslinie |
| 621, 621' | erster Steuerpunkt der abgeänderten zusätzlichen Sollisoastigmatismuslinie 601, 601' |

| 80 | Daten bezüglich des Grunddesigns |
|---|---|
| S1 | Erfassen von individuellen Daten |
| S2 | Berechnen eines individuellen Designs |
| S3 | Optimieren bzw. Berechnen eines individuellen Brillenglases |
| S4 | Bearbeitung des Brillenglases |
| $y_F$ | vertikale Koordinate an der Grenze Fernteil-Progressionsbereich |
| $y_N$ | vertikale Koordinate an der Grenze Nahteil-Progressionsbereich |

**Patentansprüche**

1. Computerimplementiertes Verfahren zum Erzeugen bzw. Berechnen eines Designs für ein progressives Brillenglas umfassend die Schritte:

  - Festlegen eines Startdesigns umfassend:

    - Vorgabe einer Hauptlinie (40; 70);
    - Vorgaben für Sollastigmatismuswerte $A(u = 0, y)$ entlang der Hauptlinie (40, 70); und
    - Vorgaben für den Verlauf zumindest einer Basis-Sollisoastigmatismuslinie $u_G(y)$ (10, 10'; 50, 50'), wobei die Basis-Sollisoastigmatismuslinie (10, 10'; 50, 50') durch einen ersten vorgegebenen oder vorgebbaren Steuerpunkt $\overline{r}_1 = (u_1, y_1)$ verläuft;

  - Transformieren des Startdesigns, wobei das Transformieren des Startdesigns

    - ein Abändern des Verlaufs der Basis-Sollisoastigmatismuslinie (10, 10'; 50, 50') $u_G(y) \rightarrow u'_G(y)$; und
    - ein Berechnen der Sollastigmatismuswerte $A(u, y)$ des zu berechnenden Designs mittels einer Interpolation zwischen den Sollastigmatismuswerten $A(u = 0, y)$ auf der Hauptlinie (40, 70) und den Sollastigmatismuswerten $A(u'_G(y), y)$ auf der abgeänderten Basis-Sollisoastigmatismuslinie (101, 101'; 501, 501')

  umfaßt, wobei
  das Abändern des Verlaufs der Basis-Sollisoastigmatismuslinie (10, 10'; 50, 50') die Schritte

- Verschieben des ersten Steuerpunkts $\bar{r}_1 \rightarrow \bar{r}'_1$ ($u'_1$, $y'_1$) entlang einer vorgegebenen bzw. vorgebbaren Kurve; und
- Berechnen der abgeänderten Basis-Sollisoastigmatismuslinie (101, 101'; 501, 501') derart, daß diese durch den verschobenen ersten Steuerpunkt $\bar{r}'_1(u'_1, y'_1)$ verläuft,

umfaßt, und wobei

$u$ den horizontalen Abstand von der Hauptlinie (40; 70) eines Punktes ($u$, $y$) des Brillenglasdesigns;
$y$ die vertikale Koordinate des Punktes ($u$, $y$) des Brillenglasdesigns;
$u_G(y)$ den horizontalen Abstand von der Hauptlinie (40; 70) eines Punktes ($u_G(y)$,$y$) auf der Basis-Sollisoastigmatismuslinie (10, 10'; 50, 50');
$u'_G(y)$ den horizontalen Abstand von der Hauptlinie (40; 70) eines Punktes ($u'_G(y)$,$y$) auf der abgeänderten Basis-Sollisoastigmatismuslinie (101, 101'; 501, 501')

bezeichnen.

2. Verfahren gemäß Anspruch 1, wobei die Interpolation eine lineare, quadratische oder kubische Interpolation ist.

3. Verfahren gemäß einem der vorangegangenen Ansprüche, wobei

- das Startdesign ferner eine Vorgabe für den Verlauf einer zusätzlichen Sollisoastigmatismuslinie (20, 20'; 60, 60') im Fern- und/oder Nahteil umfaßt, wobei der Verlauf der zusätzlichen Sollisoastigmatismuslinie (20, 20'; 60, 60') durch eine eindimensionale Funktion der Form $u_Z(y)=f_Z(y)$ beschrieben wird;
- die Transformation des Startdesigns ferner ein Abändern des Verlaufs der zusätzlichen Sollisoastigmatismuslinie (20, 20'; 60, 60') des Startdesigns $u_Z(y) \rightarrow u'_Z(y)$ umfaßt,

und wobei die Interpolation zwischen den Sollastigmatismuswerten auf der Hauptlinie (40, 70) und den Sollastigmatismuswerten auf der abgeänderten Basis-Sollisoastigmatismuslinie (10, 10'; 50, 50')

- eine Interpolation zwischen den Sollastigmatismuswerten $A(u = 0, y)$ auf der Hauptlinie (40, 70) und den Sollastigmatismuswerten $A(u'_Z(y),y)$ auf der abgeänderten zusätzlichen Sollisoastigmatismuslinie (201, 201'; 601, 601'); und
- eine Interpolation zwischen den Sollastigmatismuswerten $A(u'_Z(y),y)$ auf der abgeänderten zusätzlichen Sollisoastigmatismuslinie (201, 201'; 601, 601') und den Sollastigmatismuswerten $A(u'_G(y), y)$ auf der abgeänderten Basis-Sollisoastigmatismuslinie (101, 101'; 501, 501')

umfaßt, wobei

$u_Z(y)$ den horizontalen Abstand von der Hauptlinie (40; 70) eines Punktes ($u_Z(y)$, $y$) auf der zusätzlichen Sollisoastigmatismuslinie (20, 20'; 60, 60') des Startdesigns; und
$u'_Z(y)$ den horizontalen Abstand von der Hauptlinie (40; 70) eines Punktes ($u'_Z(y)$, $y$) auf der abgeänderten zusätzlichen Sollisoastigmatismuslinie (201, 201'; 601, 601')

bezeichnen.

4. Verfahren gemäß einem der vorangegangenen Ansprüche, wobei im Progressionsbereich der Verlauf der Basis-Sollisoastigmatismuslinie nicht abgeändert wird.

5. Verfahren gemäß einem der vorangegangenen Ansprüche, wobei die Basis-Sollisoastigmatismuslinie (10, 10'; 50, 50') ferner durch einen zweiten vorgegebenen oder vorgebbaren *Steuerpunkt* $\bar{r}_2 = (u_2, y_2)$ verläuft, und wobei das Abändern des Verlaufs der Basis-Sollisoastigmatismuslinie (10, 10'; 50, 50') ferner die Schritte:

- Verschieben des zweiten Steuerpunkts $\bar{r}_2 \rightarrow \bar{r}'_2$ ($u'_2$,$y'_2$) entlang einer vorgegebenen bzw. vorgebbaren Kurve; und
- Berechnung der abgeänderten Basis-Sollisoastigmatismuslinie (101, 101'; 501, 501') derart, daß diese durch den verschobenen zweiten Steuerpunkt $\bar{r}'_2$ ($u'_2$, $y'_2$) verläuft

umfaßt.

6. Verfahren gemäß einem der vorangegangenen Ansprüche, wobei die Basis-Sollisoastigmatismuslinie (10, 10'; 50,'50') und die abgeänderte Basis-Sollisoastigmatismuslinie (101, 101'; 501, 501') durch zumindest einen vorgegebenen oder vorgebbaren Angel- bzw. Fixpunkt $\overline{r}_0 = (u_0, y_0)$ verlaufen, wobei im Angel- bzw. Fixpunkt die Bedingungen:

$$u_G(y_0) = u'_G(y_0)$$

$$\frac{du_G(y_0)}{dy} = \frac{du'_G(y_0)}{dy}$$

erfüllt sind.

7. Verfahren gemäß Anspruch 6, wobei im Nahteil die Basis-Sollisoastigmatismuslinie (10, 10'; 50, 50') durch den Angel- bzw. Fixpunkt $(u, y = y_N)$ und durch den Steuerpunkt $\overline{r}_n(u_n, y_n)$ verläuft, die abgeänderte Basis-Sollisoastigmatismuslinie (101, 101'; 501, 501') durch den verschobenen Steuerpunkt $\overline{r}'_n(u'_n, y'_n)$ verläuft, der Verlauf der Basis-Sollisoastigmatismuslinie (10, 10'; 50, 50') des Startdesigns durch die Funktion

$$u_G(y) = a_n + \frac{b_n}{y} + \frac{c_n}{y^2} + \frac{d_n}{y^3}$$ mit den Parametern $a_n, b_n, c_n, d_n$ beschrieben wird und der Verlauf der abgeänderten Basis-Sollisoastigmatismuslinie (101, 101'; 501, 501') durch die Funktion

$$u'_G(y) = a'_n + \frac{b'_n}{y} + \frac{c'_n}{y^2} + \frac{d'_n}{y^3}$$ mit den Parametern $a'_n, b'_n, c'_n, d'_n$ beschrieben wird, und wobei der Verlauf der abgeänderten Basis-Sollisoastigmatismuslinie durch Lösung des Systems linearer Gleichungen:

$$u'_G(y = y_N) = u_G(y = y_N)$$

$$\frac{du'_G(y = y_N)}{dy} = \frac{du_G(y = y_N)}{dy}$$

$$u'_G(y = y'_n) = a'_n + \frac{b'_n}{y'_n} + \frac{c'_n}{{y'_n}^2} + \frac{d'_n}{{y'_n}^3},$$

berechnet wird.

8. Verfahren gemäß Anspruch 6 oder 7, wobei im Fernteil die Basis-Sollisoastigmatismuslinie (10, 10'; 50, 50') durch den Angel- bzw. Fixpunkt $(u, y = y_F)$ und durch den Steuerpunkt $\overline{r}_f(u_f, y_f)$ verläuft, die abgeänderte Basis-Sollisoastigmatismuslinie (101, 101'; 501, 501') durch den verschobenen Steuerpunkt $\overline{r}'_f(u'_f, y'_f)$ verläuft, der Verlauf der Basis-Sollisoastigmatismuslinie (10, 10'; 50, 50') des Startdesigns durch ein Polynom $u_G(y) = a_f + b_f y + c_f y^n$ der Ordnung $n$ mit den Parametern $a_f, b_f, c_f$ beschrieben wird, und der Verlauf der abgeänderten Basis-Sollisoastigmatismuslinie (101, 101'; 501, 501') durch ein Polynom $u'_G(y) = a'_f + b'_f y + c'_f y^n$ der Ordnung $n$ mit den Parametern $a'_f, b'_f, c'_f$ beschrieben wird, und wobei der Verlauf der Basis-Sollisoastigmatismuslinie im Fernteil durch Lösung des Systems linearer Gleichungen:

$$u'_G(y = y_F) = u_G(y = y_F)$$

$$\frac{du'_G(y = y_F)}{dy} = \frac{du_G(y = y_F)}{dy}$$

$$u'_G(y = y'_f) = a'_f + b'_f \, y'_f + c'_f \, y'^{n}_f$$

berechnet wird.

9. Verfahren gemäß Anspruch 6 oder 7, wobei im Fernteil die Basis-Sollisoastigmatismuslinie (10, 10'; 50, 50') durch den Angel- bzw. Fixpunkt $(u, y = y_F)$ und durch die Steuerpunkte $\overline{r}_{f1}(u_{f1}, y_{f1})$ und $\overline{r}_{f2}(u_{f2}, y_{f2})$ verläuft, die abgeänderte Basis-Sollisoastigmatismuslinie (101, 101'; 501, 501') durch die verschobenen Steuerpunkte $\overline{r}'_{f1}(u'_{f1}, y'_{f1})$ und $\overline{r}'_{f2}(u'_{f2}, y'_{f2})$ verläuft, der Verlauf der Basis-Sollisoastigmatismuslinie (10, 10'; 50, 50') des Startdesigns durch die

Funktion $\quad u_G(y) = a + b(\text{atan}(\dfrac{y - c}{d}) + \dfrac{\pi}{2})$ mit den Parametern $a$, $b$, $c$, $d$ beschrieben wird und der Verlauf der abgeänderten Basis-Sollisoastigmatismuslinie (101, 101'; 501, 501') durch die Funktion

$$u_G(y) = a' + b'(\text{atan}(\frac{y - c'}{d'}) + \frac{\pi}{2})$$ mit den Parametern $a'$,$b'$,$c'$,$d'$ beschrieben wird, und wobei der Verlauf der Basis-Sollisoastigmatismuslinie im Fernteil durch Lösung des Systems linearer Gleichungen:

$$u'_G(y = y_F) = u_G(y = y_F)$$

$$\frac{du'_G(y = y_F)}{dy} = \frac{du_G(y = y_F)}{dy}$$

$$u'_G(y = y'_{f1}) = a' + b'(\text{atan}(\frac{y'_{f1} - c'}{d'}) + \frac{\pi}{2})$$

$$u'_G(y = y'_{f2}) = a' + b'(\text{atan}(\frac{y'_{f2} - c'}{d'}) + \frac{\pi}{2}),$$

berechnet wird.

10. Verfahren gemäß einem der vorangegangenen Ansprüche, wobei der Verlauf der Basis-Sollisoastigmatismuslinie (10, 10'; 50, 50') unter Berücksichtigung von individuellen Daten des Brillenträgers abgeändert wird.

11. Verfahren gemäß Anspruch 10, wobei die individuellen Daten des Brillenträgers, welche bei dem Abändern des Verlaufs der Basis-Sollisoastigmatismuslinie (10, 10'; 50, 50') berücksichtigt werden, Daten bezüglich

- der Gewichtung des Fern- und Nahbereichs und/oder
- der Anwendungsschwerpunkte der Brille und/oder
- Fassungs- und Zentrierdaten

umfassen.

12. Verfahren gemäß einem der vorangegangenen Ansprüche umfassend ferner einen Schritt des Erfassens von individuellen Parametern des Brillenträgers.

13. Verfahren nach einem der vorangegangenen Ansprüche, wobei die Transformation des Startdesigns ferner eine Transformation der Sollastigmatismuswerte in Abhängigkeit von einer variabel einstellbaren, individuellen vertikalen Position des Fern- und/oder Nahbezugspunkts umfaßt, welche derart erfolgt, daß das individuelle Brillenglasdesign die geforderte, individuelle vertikale Position des Fern- und/oder Nahbezugspunkts aufweist.

14. Verfahren gemäß einem der vorangegangenen Ansprüche, wobei das Startdesign ferner eine Vorgabe für eine Objektabstandsfunktion entlang der Hauptlinie des Brillenglases, und das Verfahren ferner eine Transformation der Objektabstandsfunktion des Startdesigns umfaßt.

15. Vorrichtung zum Erzeugen bzw. Berechnen eines Designs für ein progressives Brillenglas umfassend Designtransformationsmittel, welche ausgelegt sind, eine Transformation eines vorgegebenen Startdesigns durchzuführen, wobei das Startdesign umfaßt:

- Vorgabe einer Hauptlinie (40; 70);
- Vorgaben für Sollastigmatismuswerte $A(u = 0, y)$ entlang der Hauptlinie (40, 70); und
- Vorgaben für den Verlauf zumindest einer Basis-Sollisoastigmatismuslinie $u_G(y)$ (10, 10'; 50, 50'), wobei die Basis-Sollisoastigmatismuslinie (10, 10'; 50, 50') durch einen ersten vorgegebenen oder vorgebbaren Steuerpunkt $\overline{r}_1 = (u_1, y_1)$ verläuft,

wobei die Designtransformationsmittel

- Berechnungsmittel, welche ausgelegt sind, ein Abändern des Verlaufs der Basis-Sollisoastigmatismuslinie (10, 10'; 50, 50') durchzuführen; und
- Berechnungsmittel, welche ausgelegt sind, ein Berechnen der Sollastigmatismuswerte $A(u, y)$ des zu berechnenden Designs mittels einer Interpolation zwischen den Sollastigmatismuswerten $A(u = 0, y)$ auf der Hauptlinie (40, 70) und den Sollastigmatismuswerten $A(u'_G(y), y)$ auf der abgeänderten Basis-Sollisoastigmatismuslinie (101, 101'; 501, 501') durchzuführen,

umfassen,
wobei das Abändern des Verlaufs der Basis-Sollisoastigmatismuslinie (10, 10'; 50, 50')

- ein Verschieben des ersten Steuerpunkts $\overline{r}_1 \rightarrow \overline{r}'_1 (u'_1, y'_1)$ entlang einer vorgegebenen bzw. vorgebbaren Kurve; und
- ein Berechnen der abgeänderten Basis-Sollisoastigmatismuslinie (101, 101'; 501, 501') derart, daß diese durch den verschobenen ersten Steuerpunkt $\overline{r}'_1 (u'_1, y'_1)$ verläuft,

umfaßt, und wobei

$u$ den horizontalen Abstand von der Hauptlinie (40; 70) eines Punktes $(u, y)$ des Brillenglasdesigns;
$y$ die vertikale Koordinate des Punktes $(u, y)$ des Brillenglasdesigns;
$u_G(y)$ den horizontalen Abstand von der Hauptlinie (40; 70) eines Punktes $(u_G(y), y)$ auf der Basis-Sollisoastigmatismuslinie (10, 10 ; 50, 50');
$u'_G(y)$ den horizontalen Abstand von der Hauptlinie (40; 70) eines Punktes $(u'_G(y), y)$ auf der abgeänderten Basis-Sollisoastigmatismuslinie (101, 101'; 501, 501')

bezeichnen.

16. Computerprogrammerzeugnis, welches ausgelegt ist, wenn geladen und ausgeführt auf einem Computer, ein Verfahren zum Erzeugen bzw. Berechnen eines Designs für ein progressives Brillenglas gemäß einem der Ansprüche 1 bis 14 durchzuführen.

17. Verfahren zum Herstellen eines progressiven Brillenglases umfassend:

- Berechnen eines Designs für das Brillenglas nach dem Verfahren zum Erzeugen bzw. Berechnen eines Designs gemäß einem der Ansprüche 1 bis 14; und
- Berechnen bzw. Optimieren des Brillenglases nach dem berechneten Brillenglasdesign.

**18.** Verfahren gemäß Anspruch 17, wobei die Berechnung bzw. Optimierung des Brillenglases ferner unter Berücksichtigung von individuellen Daten des Brillenträgers erfolgt.

**19.** Vorrichtung zum Herstellen eines progressiven Brillenglases, umfassend

- Designberechnungsmittel, welche ausgelegt sind, ein Designs für das Brillenglas nach dem Verfahren zum Erzeugen bzw. Berechnen eines Designs gemäß einem der Ansprüche 1 bis 14 zu berechnen; und
- Optimierungs- bzw. Berechnungsmittel, welche ausgelegt sind, ein Berechnen bzw. Optimieren des Brillenglases nach dem berechneten Design durchzuführen.

**20.** Computerprogrammerzeugnis, welches ausgelegt ist, wenn geladen und ausgeführt auf einem Computer, ein Verfahren zum Berechnen und Optimieren eines progressiven Brillenglases durchzuführen, wobei das Verfahren folgende Schritte umfaßt

- Berechnen eines Designs für das Brillenglas nach dem Verfahren zum Erzeugen bzw. Berechnen eines Designs gemäß einem der Ansprüche 1 bis 14;
- Berechnen bzw. Optimieren des Brillenglases nach dem berechneten Design.

**Claims**

**1.** Computer-implemented method for generating or calculating a design for a progressive spectacle lens comprising the steps:

• defining a starting design comprising:

◦ specification of a principal line (40; 70);
◦ specifications for base astigmatism values $A(u = 0,y)$ along the principal line (40, 70); and
◦ specifications for the course of at least one base target isoastigmatism line $u_G(y)$ (10, 10'; 50, 50'), wherein the base target isoastigmatism line (10, 10'; 50, 50') runs through a first predetermined or predeterminable control point $\bar{r}_1 = (u_1, y_1)$;

• transforming the starting design, wherein transforming of the starting design comprises:

◦ modifying the course of the base target isoastigmatism line (10, 10'; 50, 50') $u_G(y) \rightarrow u'_G(y)$; and
◦ calculating the target astigmatism values $A(u, y)$ of the design to be calculated by means of an interpolation between the target astigmatism values $A(u = 0,y)$ on the principal line (40, 70) and the target astigmatism values $A(u'_G(y), y)$ on the modified base target isoastigmatism line (101 101'; 501, 501')

wherein
modifying the course of the base target isoastigmatism line (10, 10'; 50, 50') comprises the steps:

• shifting the first control point $\bar{r}_1 \rightarrow \bar{r}_1 (u'_1, y'_1)$ along a predetermined or predeterminable curve; and
• calculating the modified base target isoastigmatism line (101 101'; 501, 501') in such a manner that this runs through the shifted first control point $\bar{r}_1 (u'_1, y'_1)$,

and wherein

$u$ denotes the horizontal distance of a point $(x, y)$ of the spectacle lens design from the principal line (40; 70);
$y$ the vertical coordinate of the point $(u, y)$ of the spectacle lens design;
$u_G(y)$ the horizontal distance of a point $(u_G(y), y)$ on the base target isoastigmatism line (10, 10'; 50, 50') from the principal line (40; 70);
$u'_G(y)$ the horizontal distance of a point $(u'_G(y), y)$ on the modified base target isoastigmatism line (101, 101';

501, 501') from the principal line (40; 70).

2. Method according to claim 1, wherein the interpolation is a linear, quadratic or cubic interpolation.

3. Method according to one of the preceding claims, wherein

- the starting design additionally comprises a specification for the course of an additional target isoastigmatism line (20, 20'; 60, 60') in the far and/or near portion, wherein the course of the additional target isoastigmatism line (20, 20'; 60, 60') is described by a one-dimensional function of the form $u_Z(y)= f_z(y)$;
- the transformation of the starting design additionally comprises a modification of the course of the additional target isoastigmatism line (20, 20'; 60, 60') of the starting design $u_Z(y) \to u'_Z(y)$,

and wherein the interpolation between the target astigmatism values on the principal line (40, 70) and the target astigmatism values on the modified base target isoastigmatism line (10, 10'; 50, 50')

- comprise an interpolation between the target astigmatism values $A(u = 0,y)$ on the principal line (40, 70) and the target astigmatism values $A(u'_Z (y), y)$ on the modified additional target isoastigmatism line (201, 201'; 601, 601'); and
- an interpolation between the target astigmatism values $A(u'_Z (y), y)$ on the modified additional target isoastigmatism line (201, 201'; 601, 601') and the target astigmatism values $A(u'_G (y), y)$ on the modified base target isoastigmatism line (101, 101 ; 501, 501'),

wherein

$u_Z(y)$ denotes the horizontal distance of a point $(u_Z(y), y)$ on the additional target isoastigmatism line (20, 20'; 60, 60') of the starting design from the principal line (40, 70); and
$u'_Z(y)$ the horizontal distance of a point $(u'_Z(y), y)$ on the modified additional target isoastigmatism line (201, 201'; 601, 601') from the principal line (40; 70).

4. Method according to one of the preceding claims, wherein the course of the base target isoastigmatism is not modified in the progression area.

5. Method according to one of the preceding claims, wherein the base target isoastigmatism (10, 10'; 50, 50') additionally runs through a second predetermined or predeterminable control point $\overline{r}_2= (u_2, y_2)$, and wherein the modification of the course of the base target isoastigmatism line (10, 10'; 50, 50') additionally comprises the steps:

- shifting the second control point $\overline{r}_2 \to \overline{r}'_2 (u'_2, y'_2)$ along a predetermined or predeterminable curve; and
- calculating the modified base target isoastigmatism line (101 101'; 501, 501') in such a manner that this runs through the shifted second control point $\overline{r}'_2 (u'_2, y'_2)$.

6. Method according to one of the preceding claims, wherein the base target isoastigmatism line (10, 10'; 50, 50') and the modified base target isoastigmatism line (101 101'; 501, 501') run through at least one predetermined or predeterminable polar or fixed point $\overline{r}_0 = (u_0, y_0)$, wherein at the polar or fixed point the conditions

$$u_G(y_0)=u'_G(y_0)$$

$$\frac{du_G(y_0)}{dy} = \frac{du'_G(y_0)}{dy}$$

are met.

7. Method according to claim 6, wherein in the near portion the base target isoastigmatism line (10, 10'; 50, 50') runs through the polar or fixed point $(u,y = y_N)$ and through the control point $\overline{r}_n (u_n, y_n)$, the modified base target isoastigmatism line (101 101'; 501, 501') runs through the shifted control point $\overline{r}'_n (u'_n, y'_n)$, the course of the base target isoastigmatism line (10, 10'; 50, 50') of the starting design is described by the function

$$u_G(y) = a_n + \frac{b_n}{y} + \frac{c_n}{y^2} + \frac{d_n}{y^3}$$ with the parameters $a_n$, $b_n$, $c_n$, $d_n$ and the course of the modified base target isoastigmatism line (101 101'; 501, 501') is described by the function $$u'_G(y) = a'_n + \frac{b'_n}{y} + \frac{c'_n}{y^2} + \frac{d'_n}{y^3}$$ with

the parameters $a'_n$, $b'_n$, $c'_n$, $d'_n$, and wherein the course of the modified base target isoastigmatism line is calculated by the solution of the system of linear equations:

$$u'_G(y = y_N) = u_G(y = y_N)$$

$$\frac{du'_G(y=y_N)}{d_y} = \frac{du_G(y=y_N)}{d_y}$$

$$u'_G(y = y'_n) = a'_n + \frac{b'_n}{y'_n} + \frac{c'_n}{y'_{n2}} + \frac{d'_n}{y'_{n3}}.$$

8. Method according to claim 6 or 7, wherein in the far portion the base target isoastigmatism line (10, 10'; 50, 50') runs through the polar or fixed point ($u, y = y_F$), and through the control point $\bar{r}_f$ ($u_f$, $y_f$), the modified base target isoastigmatism line (101 101'; 501, 501') runs through the shifted control point $\bar{r}'_f(u'_f, y'_f)$, the course of the base target isoastigmatism line (10, 10'; 50, 50') of the starting design is described by a polynomial $u_G(y) = a_f + b_f y + c_f y^n$ of the order n with the parameters $a_f$, $b_f$, $c_f$, and the course of the modified base target isoastigmatism line (101, 101'; 501, 501') is described by a polynomial $u'_G(y) = a'_f + b'_f y + c'_f y^n$ of the order n with the parameters $a'_f$, $b'_f$, $c'_f$, and wherein the course of the base target isoastigmatism line in the far portion is calculated by the solution of the system of linear equations:

$$u'_G(y = y_F) = u_G(y = y_F)$$

$$\frac{du'_G(y=y_F)}{d_y} = \frac{du_G(y=y_F)}{d_y}$$

$$u'_G\left(y = y'_f\right) = a'_f + b'_f y'_f + c'_f y'_f{}^n.$$

9. Method according to claim 6 or 7, wherein in the far portion the base target isoastigmatism line (10, 10'; 50, 50') runs through the polar or fixed point ($u, y = y_F$), and through the control points $\bar{r}_{f1}$ ($u_{f1}$, $y_{f1}$) and $\bar{r}_{f2}$ ($u_{f2}$, $y_{f2}$), the modified base target isoastigmatism line (101 101'; 501, 501') runs through the shifted control points $\bar{r}'_{f1}$ ($u'_{f1}$, $y'_{f1}$) and $\bar{r}'_{f2}$ ($u'_{f2}$, $y'_{f2}$), the course of the base target isoastigmatism line (10, 10'; 50, 50') of the starting design is described by the function $$u_G(y) = a + b\left(\mathrm{atan}\left(\frac{y-c}{d}\right) + \frac{\pi}{2}\right)$$ with the parameters $a, b, c, d$ and the course of the modified base target isoastigmatism line (101 101'; 501, 501') is described by the function

$$u_G(y) = a' + b'\left(\mathrm{atan}\left(\frac{y-c'}{d'}\right) + \frac{\pi}{2}\right)$$ with the parameters $a', b', c', d'$, and wherein the course of the base target isoastigmatism line in the far portion is calculated by the solution of the system of linear equations:

$$u'_G(y = y_F) = u_G(y = y_F)$$

$$\frac{du'_G(y=y_F)}{d_y} = \frac{du_G(y=y_F)}{d_y}$$

$$u'_G\left(y = y'_{f1}\right) = a' + b'\left(\text{atan}\left(\frac{y'_{f1}-c'}{d'}\right) + \frac{\pi}{2}\right)$$

$$u'_G\left(y = y'_{f2}\right) = a' + b'\left(\text{atan}\left(\frac{y'_{f2}-c'}{d'}\right) + \frac{\pi}{2}\right).$$

10. Method according to one of the preceding claims, wherein the course of the base target isoastigmatism line (10, 10'; 50, 50') is modified with consideration of individual data of the spectacle wearer.

11. Method according to claim 10, wherein the individual data of the spectacle wearer that are to be taken into consideration during the modification of the course of the base target isoastigmatism line (10, 10'; 50, 50') comprise data relating to

   • the weighting of the far and near zone and/or
   • the application focuses of the spectacles and/or
   • frame and centration data.

12. Method according to one of the preceding claims additionally comprising a step of determining individual parameters of the spectacle wearer.

13. Method according to one of the preceding claims, wherein the transformation of the starting design additionally comprises a transformation of the target astigmatism values as a function of a variably adjustable individual vertical position of the far and/or near reference point, which is performed in such a manner that the individual spectacle lens design has the required individual vertical position of the far and/or near reference point.

14. Method according to one of the preceding claims, wherein the starting design additionally comprises a specification for an object distance function along the principal line of the spectacle lens, and the method additionally comprises a transformation of the object distance function of the starting design.

15. Device for generating or calculating a design for a progressive spectacle lens comprising design transformation elements, which are designed to conduct a transformation of a predetermined starting design, wherein the starting design comprises:

   • specification of a principal line (40; 70);
   • specifications for base astigmatism values $A(u = 0, y)$ along the principal line (40, 70); and
   • specifications for the course of at least one base target isoastigmatism line $u_G(y)$ (10, 10'; 50, 50'), wherein the base target isoastigmatism line (10, 10'; 50, 50') runs through a first predetermined or predeterminable control point $\bar{r}_1 = (u_1, y_1)$;

wherein the design transformation elements comprise

   • calculation elements that are designed to conduct a modification of the course of the base target isoastigmatism line (10, 10'; 50, 50'); and
   • calculation elements that are designed to perform a calculation of the target astigmatism values $A(u, y)$ of the design to be calculated by means of an interpolation between the target astigmatism values $A(u = 0, y)$ on the principal line (40, 70) and the target astigmatism values $A(u'_G(y), y)$ on the modified base target isoastigmatism line (101 101'; 501, 501')

wherein modifying the course of the base target isoastigmatism line (10, 10'; 50, 50') comprises:

• shifting the first control point $\bar{r}_1 \rightarrow \bar{r}'_1$ ($u'_1$, $y'_1$) along a predetermined or predeterminable curve; and
• calculating the modified base target isoastigmatism line (101 101'; 501, 501') in such a manner that this runs through the shifted first control point $\bar{r}_1$ ($u'_1$, $y'_1$),

and wherein

$u$ denotes the horizontal distance of a point ($x$, $y$) of the spectacle lens design from the principal line (40; 70);
$y$ the vertical coordinate of the point ($u$, $y$) of the spectacle lens design;
$u_G(y)$ the horizontal distance of a point ($u_G(y)$, $y$) on the base target isoastigmatism line (10, 10'; 50, 50') from the principal line (40; 70);
$u'_G(y)$ the horizontal distance of a point ($u'_G(y)$, $y$) on the modified base target isoastigmatism line (101, 101'; 501, 501') from the principal line (40; 70).

16. Computer program product, which when loaded and executed on a computer is designed to perform a method for generating or calculating a design for a progressive spectacle lens according to one of claims 1 to 14.

17. Method for producing a progressive spectacle lens comprising:

• calculating a design for the progressive spectacle lens using the method for generating or calculating a design according to one of claims 1 to 14; and
• calculating or optimising the spectacle lens according to the calculated spectacle lens design.

18. Method according to claim 17, wherein the calculation or optimisation of the spectacle lens is additionally performed with consideration of individual data of the spectacle wearer.

19. Device for producing a progressive spectacle lens comprising:

• design calculation elements, which are designed to calculate a design for the spectacle lens using the method for generating or calculating a design according to one of claims 1 to 14; and
• optimisation or calculation elements, which are designed to perform a calculation or optimisation of the spectacle lens according to the calculated design.

20. Computer program product, which when loaded and executed on a computer is designed to perform a method for calculating and optimising a progressive spectacle lens design, wherein the method comprises the following steps:

• calculating a design for the progressive spectacle lens using the method for generating or calculating a design according to one of claims 1 to 14;
• calculating or optimising the spectacle lens according to the calculated individual design.

**Revendications**

1. Procédé implémenté d'un ordinateur pour la conception, respectivement, le calcul, du design d'un verre de lunettes progressif, comprenant les étapes de :

- mise au point d'un design initial, comportant :

- l'indication d'une ligne méridienne principale (40 ; 70) ;
- les indications pour des valeurs d'astigmatisme nominal A($u = 0$,$y$) le long de la ligne méridienne principale (40 ; 70), et
- des indications pour le tracé d'au moins une ligne d'astigmatisme nominal de base $u_G(y)$ (10, 10' ; 50, 50'), la ligne d'astigmatisme nominal de base (10, 10' ; 50, 50') passant par un premier point d'origine prédéfini ou pouvant être prédéfini $\acute{r}_1 = (u_1, y_1)$ ;

- transformation du design initial, la transformation du design initial comprenant

- une modification du tracé de la ligne d'astigmatisme nominal de base (10, 10' ; 50, 50') $u_G(y) \rightarrow u'_G(y)$ ; et

- un calcul des valeurs d'astigmatisme nominal A(u,y) du design à calculer au moyen d'une interpolation entre les valeurs d'astigmatisme nominal A(u = 0,y) sur la ligne méridienne principale (40 ; 70) et des valeurs d'astigmatisme nominal A(u'$_G$(y),y) sur la ligne d'astigmatisme nominal modifiée (101, 101' ; 501, 501'),

la modification du tracé de la ligne d'astigmatisme de base (10, 10' ; 50, 50') comprenant les étapes

- de décalage du premier point d'origine $\acute{r}_1 \rightarrow \acute{r}'_1$ (u'$_1$, y'$_1$) le long d'une courbe prédéfinie ou pouvant être prédéfinie ; et
- de calcul de la ligne d'astigmatisme nominal de base modifiée (101, 101' ; 501, 501') de telle sorte que celle-ci passe par le premier point d'origine $\acute{r}'_1$(u'$_1$,y'$_1$) décalé, et où

u désigne la distance horizontale entre un point (u,y) du design du verre de lunettes et la ligne méridienne principale (40 ; 70) ;
y désigne la coordonnée verticale du point (u, y) du design du verre de lunettes ;
u$_G$(y) désigne la distance horizontale entre un point (u$_G$(y),y) sur la ligne d'astigmatisme nominal de base (10, 10' ; 50, 50') et la ligne méridienne principale (40 ; 70) ;
u'$_G$(y) désigne la distance horizontale entre un point (u'$_G$(y),y) sur la ligne d'astigmatisme nominal modifiée (101, 101' ; 501, 501') et la ligne méridienne principale (40 ; 70).

**2.** Procédé selon la revendication 1, l'interpolation étant une interpolation linéaire, quadratique ou cubique.

**3.** Procédé selon l'une des revendications précédentes, où

- le design initial comprend en outre une indication pour le tracé d'une ligne d'astigmatisme nominal supplémentaire (20, 20' ; 60, 60') dans la partie de vision de loin et/ou dans la partie de vision de près, le tracé de la ligne d'astigmatisme nominal supplémentaire (20, 20' ; 60, 60') étant décrit par une fonction unidimensionnelle de la forme u$_Z$(y) = f$_Z$(y) ;
- la transformation du design initial comprend en outre une modification du tracé de la ligne d'astigmatisme nominal supplémentaire (20, 20' ; 60, 60') du design initial u$_Z$(y) → u'$_Z$(y),

et où l'interpolation entre les valeurs d'astigmatisme nominal sur la ligne méridienne principale (40 ; 70) et les valeurs d'astigmatisme nominal sur la ligne d'astigmatisme nominal de base modifiée (10, 10' ; 50, 50') comprend

- une interpolation entre les valeurs d'astigmatisme nominal A(u = 0,y) sur la ligne méridienne principale (40 ; 70) et les valeurs d'astigmatisme nominal A(u'$_Z$(y),y) sur la ligne d'astigmatisme nominal supplémentaire modifiée (201, 201' ; 601, 601') ; et
- une interpolation entre les valeurs d'astigmatisme nominal A(u'$_Z$(y),y) sur la ligne d'astigmatisme nominal supplémentaire modifiée (201, 201' ; 601, 601') et les valeurs d'astigmatisme nominal A(u'$_G$(y),y) sur la ligne d'astigmatisme nominal de base modifiée (101, 101' ; 501, 501'),

où

u$_Z$(y) désigne la distance horizontale entre un point (u$_Z$(y), y) sur la ligne d'astigmatisme nominal supplémentaire (20, 20' ; 60, 60') du design initial et la ligne méridienne principale (40 ; 70) ; et
u'$_Z$(y) désigne la distance horizontale entre un point (u'$_Z$(y),y) sur la ligne d'astigmatisme nominal supplémentaire modifiée (201, 201' ; 601, 601') et la ligne méridienne principale (40 ; 70).

**4.** Procédé selon l'une des revendications précédentes, le tracé de la ligne d'astigmatisme nominal de base n'étant pas modifié dans le domaine progressif.

**5.** Procédé selon l'une des revendications précédentes, la ligne d'astigmatisme nominal de base (10, 10' ; 50, 50') passant en outre par un deuxième point d'origine $\acute{r}_2$ = (u$_2$, y$_2$) prédéfini ou pouvant être prédéfini, et la modification du tracé de la ligne d'astigmatisme nominal de base (10, 10' ; 50, 50') comprenant en outre les étapes :

- de décalage du deuxième point d'origine $\acute{r}_2 \rightarrow \acute{r}'_2$ (u'$_2$, y'$_2$) le long d'une courbe prédéfinie, respectivement, pouvant être prédéfinie ; et
- de calcul de la ligne d'astigmatisme nominal de base modifiée (101, 101' ; 501, 501') de telle sorte que celle-ci passe par le deuxième point d'origine $\acute{r}'_2$(u'$_2$,y'$_2$) décalé.

**6.** Procédé selon l'une des revendications précédentes, la ligne d'astigmatisme nominal de base (10, 10' ; 50, 50') et la ligne d'astigmatisme nominal de base modifiée (101, 101' ; 501, 501') passant par au moins un point d'ancrage, respectivement, un point fixe $f_0 = (u_0, y_0)$ prédéfini ou pouvant être prédéfini, le point d'ancrage, respectivement, le point fixe satisfaisant aux relations :

$$u_G(y_0) \; = \; u'_G(y_0)$$

$$\frac{du_G(y_0)}{dy} \; = \; \frac{du'_G(y_0)}{dy}.$$

**7.** Procédé selon la revendication 6, la ligne d'astigmatisme nominal de base (10, 10' ; 50, 50') dans la partie de vision de près passant par le point d'ancrage, respectivement, le point fixe $(u, y = y_N)$ et par le point d'origine $\acute{r}_n(u_n, y_n)$, la ligne d'astigmatisme nominal de base modifiée (101, 101' ; 501, 501') passant par le point d'origine décalé $\acute{r}'_n(u'_n, y'_n)$, le tracé de la ligne d'astigmatisme nominal de base (10, 10' ; 50, 50') du design initial étant décrit par la fonction $u_G(y) = a_n + b_n/y + c_n/y^2 + d_n/y^3$ avec les paramètres $a_n$, $b_n$, $c_n$, $d_n$, et le tracé de la ligne d'astigmatisme nominal de base modifiée (101, 101' ; 501, 501') étant décrit par la fonction $u'_G(y) = a'_n + b'_n/y + c'_n/y^2 + d'_n/y^3$ avec les paramètres $a'_n$, $b'_n$, $c'_n$, $d'_n$, et le tracé de la ligne d'astigmatisme nominal de base modifiée étant calculé par la résolution du système d'équations linéaires :

$$u'_G(y = y_N) \; = \; u_G(y = y_N)$$

$$\frac{du'_G(y = y_N)}{dy} \; = \; \frac{du_G(y = y_N)}{dy}$$

$$u'_G(y = y'_N) \; = \; a'_n + b'_n/y + c'_n/y^2 + d'_n/y^3.$$

**8.** Procédé selon les revendications 6 ou 7, la ligne d'astigmatisme nominal de base (10, 10' ; 50, 50') dans la partie de vision de loin passant par le point d'ancrage, respectivement, le point fixe $(u, y = y_F)$ et par le point d'origine $\acute{r}_f(u_f, y_f)$, la ligne d'astigmatisme nominal de base modifiée (101, 101' ; 501, 501') passant par le point d'origine décalé $\acute{r}'_f(u'_f, y'_f)$, le tracé de la ligne d'astigmatisme nominal de base (10, 10' ; 50, 50') du design initial étant décrit par un polynôme $u_G(y) = a_f + b_f\, y + c_f\, y^n$ d'ordre n avec les paramètres $a_f$, $b_f$, $c_f$, et le tracé de la ligne d'astigmatisme nominal de base modifiée (101, 101' ; 501, 501') étant décrit par un polynôme $u'_G(y) = a'_f + b'_f\, y + c'_f\, y^n$ d'ordre n avec les paramètres $a'_f$, $b'_f$, $c'_f$, et le tracé de la ligne d'astigmatisme nominal de base dans la partie de vision de loin étant calculé par la résolution du système d'équations linéaires :

$$u'_G(y = y_F) \; = \; u_G(y = y_F)$$

$$\frac{du'_G(y = y_F)}{dy} \; = \; \frac{du_G(y = y_F)}{dy}$$

$$u'_G(y = y'_f) \; = \; a'_f + b'_f\, y'_f + c'_f\, y'^n_f.$$

**9.** Procédé selon les revendications 6 ou 7, la ligne d'astigmatisme nominal de base (10, 10' ; 50, 50') dans la partie vision de loin passant par le point d'ancrage, respectivement, le point fixe $(u, y = y_F)$ et par les points d'origine $\acute{r}_{f1}(u_{f1}, y_{f1})$ et $\acute{r}_{f2}(u_{f2}, y_{f2})$, la ligne d'astigmatisme nominal de base modifiée (101, 101' ; 501, 501') passant par les points d'origine décalés $\vec{r}'_{f1}(u'_{f1}, y'_{f1})$ et $\vec{r}'_{f2}(u'_{f2}, y'_{f2})$, le tracé de la ligne d'astigmatisme nominal de base (10, 10' ; 50, 50') du design initial étant décrit par la fonction $u_G(y) = a + b(atan(y-c/d) + \pi/2$ avec les paramètres a, b, c, d, et le tracé de la ligne d'astigmatisme nominal de base modifiée (101, 101' ; 501, 501') étant décrit par la fonction $u_G(y) = a' + b'$ (atan (y-c') /d' + $\pi/2$ avec les paramètres a', b', c', d', et le tracé de la ligne d'astigmatisme nominal de base dans la partie vision de loin étant calculé par la résolution du système d'équations linéaires :

$$u'_G(y = y_F) = u_G(y = y_F)$$

$$\frac{du'_G(y = y_F)}{dy} = \frac{du_G(y = y_F)}{dy}$$

$$u'_G(y = y'_{f1}) = a' + b'(atan(y'_{f1} - c')/d' + \pi/2$$

$$u'_G(y = y'_{f2}) = a' + b'(atan(y'_{f2} - c')/d' + \pi/2.$$

**10.** Procédé selon l'une des revendications précédentes, le tracé de la ligne d'astigmatisme nominal de base (10, 10' ; 50, 50') étant modifié en tenant compte des données individuelles du porteur de lunettes.

**11.** Procédé selon la revendication 10, les données individuelles du porteur de lunettes dont il est tenu compte lors de la modification du tracé de la ligne d'astigmatisme nominal de base (10, 10' ; 50, 50') comprennent des données relatives à

- la pondération des domaines de vision de loin et de près et/ou
- des points essentiels d'utilisation des lunettes et/ou
- des données de monture et de centrage.

**12.** Procédé selon l'une des revendications précédentes comprenant en outre une étape de saisie de paramètres individuels du porteur de lunettes.

**13.** Procédé selon l'une des revendications précédentes, la transformation du design initial comprenant en outre une transformation des valeurs de l'astigmatisme nominal en fonction d'une position individuelle, verticale, du point de référence de la vision de loin et/ou de près, pouvant être réglée de façon variable, laquelle s'effectuant de telle manière que le design du verre de lunettes individuel présente la position individuelle verticale du point de référence de la vision de loin et/ou de près indispensable.

**14.** Procédé selon l'une des revendications précédentes, le design initial comprenant en outre une prescription pour une fonction de distance à l'objet le long de la ligne méridienne principale du verre de lunettes, et le procédé comprenant en outre une transformation de la fonction de distance à l'objet du design initial.

**15.** Dispositif de conception, respectivement, de calcul, du design pour un verre de lunettes progressif comprenant un moyen de transformation du design, lequel est mis en oeuvre pour réaliser une transformation d'un design initial prédéfini, le design initial comprenant :

- l'indication d'une ligne méridienne principale (40 ; 70) ;
- les indications pour des valeurs d'astigmatisme nominal A(u = 0,y) le long de la ligne méridienne principale (40 ; 70), et
- des indications pour le tracé d'au moins une ligne d'astigmatisme nominal de base $u_G(y)$ (10, 10' ; 50, 50'), la ligne d'astigmatisme nominal de base (10, 10' ; 50, 50') passant par un premier point d'origine prédéfini ou pouvant être prédéfini $\vec{r}_1 = (u_1, y_1)$

le moyen de transformation du design comprenant

- des moyens de calcul, lesquels sont mis en oeuvre pour réaliser une modification du tracé de la ligne d'astigmatisme nominal de base (10, 10' ; 50, 50') ; et
- des moyens de calcul qui sont mis en oeuvre pour réaliser un calcul des valeurs d'astigmatisme nominal $A(u,y)$ du design à calculer au moyen d'une interpolation entre les valeurs d'astigmatisme nominal $A(u = 0,y)$ sur la ligne méridienne principale (40 ; 70) et les valeurs d'astigmatisme nominal $A(u'G(y), y)$ sur la ligne d'astigmatisme nominal de base modifiée (101, 101' ; 501, 501'),

la modification du tracé de la ligne d'astigmatisme nominal de base (10, 10' ; 50, 50') comprenant

- un décalage du premier point d'origine $\acute{r}_1$
→ $\acute{r}'_1(u'_1,y'_1)$ le long d'une courbe prédéfinie, respectivement, pouvant être prédéfinie ; et
- un calcul de la ligne d'astigmatisme nominal de base modifiée (101, 101' ; 501, 501') de telle sorte que celle-ci passe par le premier point d'origine décalé $\acute{r}'_1(u'_1,y'_1)$,

et où

| | |
|---|---|
| $u$ | désigne la distance horizontale d'un point $(u,y)$ du design du verre de lunettes jusqu'à la ligne méridienne principale (40 ; 70) ; |
| $y$ | désigne la coordonnée verticale du point $(u,y)$ du design du verre de lunettes ; |
| $u_G(y)$ | désigne la distance horizontale d'un point $(u_G(y),y)$ sur la ligne d'astigmatisme nominal de base (10, 10' ; 50, 50') jusqu'à la ligne méridienne principale (40 ; 70) ; |
| $u'_G(y)$ | désigne la distance horizontale d'un point $(u'_G(y),y)$ sur la ligne d'astigmatisme nominal de base modifiée (101, 101' ; 501, 501') jusqu'à la ligne méridienne principale (40 ; 70). |

**16.** Résultat d'un programme d'ordinateur qui, lorsqu'il est chargé et exécuté sur un ordinateur, est mis au point pour réaliser un procédé de conception, respectivement, de calcul, d'un design pour un verre de lunettes progressif selon l'une des revendications 1 à 14.

**17.** Procédé de fabrication d'un verre de lunettes progressif comprenant :

- le calcul d'un design pour le verre de lunettes selon le procédé de conception, respectivement, de calcul, d'un design selon l'une des revendications 1 à 14 ; et
- le calcul, respectivement, l'optimisation, du verre de lunettes selon le design du verre de lunettes calculé.

**18.** Procédé selon la revendication 17, le calcul, respectivement, l'optimisation, du verre de lunettes étant en outre effectué(e) en tenant compte des données individuelles du porteur de lunettes.

**19.** Dispositif de fabrication d'un verre de lunettes progressif, comprenant

- des moyens de calcul du design, lesquels sont mis en oeuvre pour calculer un design pour le verre de lunettes selon le procédé de conception, respectivement, de calcul d'un design selon l'une des revendications 1 à 14 ; et
- des moyens d'optimisation, respectivement, de calcul, lesquels sont mis en oeuvre pour réaliser un calcul, respectivement, une optimisation, du verre de lunettes selon le design calculé.

**20.** Résultat d'un programme d'ordinateur, lequel est mis en oeuvre, lorsqu'il est chargé et exécuté sur un ordinateur, pour réaliser un procédé de calcul et d'optimisation d'un verre de lunettes progressif, le procédé comprenant les étapes suivantes

- calcul d'un design pour un verre de lunettes selon le procédé de conception, respectivement, de calcul, du design selon l'une des revendications 1 à 14 ;
- calcul, respectivement, optimisation, du verre de lunettes selon le design calculé.

Fig. 1

Fig. 2

Fig. 3

Fig. 4

Fig. 5

Fig. 6

Fig. 7

Fig. 8

Fig. 9

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 0100188 W
- EP 1277079 A
- EP 2008000585 W
- DE 102008105189